# EUROPÄISCHE PATENTSCHRIFT

(11) **EP 0 683 297 B1**
(45) Veröffentlichungstag und Bekanntmachung des Hinweises auf die Patenterteilung: **08.08.2001**
(21) Anmeldenummer: 95107754.4
(22) Anmeldetag: 19.05.1995
(51) Int. Cl.: E05D 15/52, E05B 17/00, B23P 21/00

(54) **Verfahren zur montageautomaten-unterstützten Montage von Beschlagsteilen an den Flügel eines Fensters, einer Tür oder dergleichen**
Method for robot assisted mounting of fittings to a wing of a window, door or the like
Procédé de montage assisté par automate des ferrures sur une aile d'une fenêtre, porte ou similaire

(30) Priorität: 20.05.1994 DE 4417818
(43) Veröffentlichungstag der Anmeldung: 22.11.1995
(73) Patentinhaber: August Winkhaus GmbH & Co KG, D-48291 Telgte (DE)
(72) Erfinder: Schenck, Hans-Peter, D-48291 Telgte (DE); Renz, Dieter, D-49479 Ibbenbüren (DE); Greisner, Paul, D-48291 Telgte (DE); Lau, Wolfgang, D-48291 Telgte (DE); Schwenk, Horst, Dr., D-48149 Münster (DE)
(74) Vertreter: Prechtel, Jörg, Dipl.-Phys. Dr.

(56) Entgegenhaltungen:
- EP-A- 0 373 991
- EP-A- 0 458 663
- EP-A- 0 459 841
- EP-A- 0 511 742
- EP-A- 0 517 552
- DE-A- 2 119 253

## Beschreibung

Die Erfindung betrifft ein Verfahren zur montageautomaten-unterstützten Montage von Beschlagsteilen eines wenigstens zwei Eckumlenkungen sowie mit den Eckumlenkungen verbundene, an die jeweiligen Flügelabmessungen angepaßte Verbindungselemente aufweisenden Beschlags an den Flügel eines Fensters, einer Tür oder dergleichen. Bei einem derartigen Beschlag ist am Flügel (bzw. Flügelrahmen) ein Treibstangensystem, in der Regel mit Handbetätigung vorgesehen zur wahlweisen Einstellung unterschiedlicher Beschlagsfunktionen, insbesondere Schließfunktion, Drehfunktion und Dreh-Kipp-Funktion, wobei Eckumlenkungen dafür sorgen, daß von einem zentralen Betätigungsglied (z.B. Handgriff) aus Riegelelemente längs mehrerer Rahmenholme in gewünschter Weise bewegt werden können. Die Riegelelemente wirken mit festrahmenseitigen Beschlägen, insbesondere Schließblechen, zusammen oder auch mit einer Ausstellschere im Falle eines Dreh-Kipp-Beschlages. Derartige Beschlagssysteme mit Eckumlenkungen werden jedoch nicht nur bei Dreh-Kipp-Beschlägen eingesetzt, sondern z.B. auch bei Drehbeschlägen, Kippbeschlägen, Klapp- und Stulpbeschlägen sowie Schiebe-Kipp-Beschlägen. Die entsprechenden Flügel (bzw. Flügelrahmen) aus Holz, Kunststoff, Stahl, Aluminium oder Verbundsystemen weisen zumindest jeweils eine Flügelfalzumfangsnut auf zur Aufnahme der Eckumlenkungen sowie der diese verbindenden Verbindungselemente aus Stulpschienenabschnitt und Treibstangenabschnitt. Der Eckwinkel der jeweiligen Eckumlenkung und die Stulpschienenabschnitte decken die ggf. gestufte Flügelfalzumfangsnut ab, so daß sich ein gefälliges Aussehen ergibt bei geringer Verschmutzungsgefahr.

Für das montageautomaten-unterstützte Anschlagen der Beschlagsteile ist von ausschlaggebender Bedeutung, daß die Taktzeit nicht länger ist als die Taktzeit vorangehender Bearbeitungsstufen, insbesondere Schweißstufe mit Verschweißen der Kunststoff- oder Aluminiumholme des Flügelrahmens und Putzstufe zur Egalisierung der Schweißnähte. Diese Taktzeit liegt beispielsweise bei zwei Minuten.

Der Erfindung liegt das technische Problem zugrunde, ein Verfahren zur Montage von Beschlagsteilen an den Flügel eines Fensters, einer Tür oder dergleichen anzugeben, welches bei relativ geringem Bauaufwand ein zumindest teilautomatisches Anschlagen, insbesondere innerhalb einer Flügelherstellungs- und -montagestraße erlaubt.

Dieses Problem wird gemäß der Erfindung dadurch gelöst, daß in einer ersten Montagephase mittels Montageautomaten sämtliche Eckumlenkungen am Flügel befestigt werden, wobei baugleiche Eckumlenkungen eingesetzt werden und daß in einer nachfolgenden zweiten Montagephase sämtliche Verbindungselemente am Flügel befestigt werden. Die Montage der Beschlagsteile wird also in zwei Montagephasen unterteilt, die jeweils für sich derart kurz sein können, daß eine durch die vorangehende Bearbeitungsstufen vorgegebene kurze Taktzeit von beispielsweise zwei Minuten ohne weiteres eingehalten werden kann. Die erste Montagephase beschränkt sich auf den Anschlag der Eckumlenkungen, was ohne weiteres durch einen Montageautomaten relativ einfachen Aufbaus und mit relativ einfacher Steuerung erfolgen kann, und zwar deshalb, weil das Anschlagen der Eckumlenkungen weitgehend unabhängig vom jeweiligen Flügelformat und, bei entsprechender Ecklagergestaltung, auch weitgehend unabhängig vom jeweils verwendeten Beschlagssystem ist. Die Montage der vom jeweiligen Flügelformat und vom jeweiligen Beschlagssystem abhängigen Verbindungselemente erfolgt erst in der zweiten Montagephase, insbesondere manuell oder teilautomatisch, was den für eine vollautomatische zweite Montagephase aufgrund der individuellen Beschlagsanpassung ansonsten erforderlichen hohen Geräte- und Steuerungsaufwand vermeidet. Da lediglich die zwei, drei oder vier Verbindungselemente anzuschlagen sind, kann auch die zweite Montagephase innerhalb des vorgegebenen kurzen Zeittakts bleiben. Von besonderem Vorteil ist, daß auf diese Weise auch ein rascher Wechsel von Flügelformat und/oder Beschlagssystem bei laufender Taktstraße möglich ist. Da baugleiche Eckumlenkungen eingesetzt werden, vereinfacht sich nicht nur die Produktion und die Lagerhaltung, sondern auch die automatische Montage in der ersten Montagephase, da der Montageautomat nicht Rücksicht auf unterschiedliche Eckumlenkungen nehmen muß. Die Eckumlenkungen können dem Montageautomaten in einem Magazin zugeführt werden, so daß die Anlage auch längere Zeit ohne Einzelteil-Nachschub arbeiten kann.

Aus der EP-A-0459841 ist es bekannt, eine Getriebeschiene 1 mittels Montageautomaten an einen Flügel zu montieren, wobei am Flügel bereits eine Verlängerung 2 sowie ein Umlenkung 3 vormontiert sind.

Günstig ist, wenn gemäß einem Vorschlag der Erfindung Eckumlenkungen eingesetzt werden, die zu einer zur Längsmittelebene der Eckumlenkungen senkrechten Winkelhalbierungsebene spiegelsymmetrisch ausgebildet sind. In diesem Falle braucht überhaupt keine Rücksicht auf die Orientierung der Eckwinkel bei der Montage oder auch innerhalb des Magazins genommen werden.

Von Vorteil ist auch der Einsatz von Eckumlenkungen mit wenigstens einem Verriegelungselement, vorzugsweise mit je einem Verriegelungselement an beiden Eckumlenkungsschenkeln. Auf diese Weise werden die für die Beschlagsfunktion wesentlichen Verriegelungselemente bereits durch das Anschlagen der Eckumlenkungen an Ort und Stelle gebracht, so daß die Verbindungselemente u.U. frei von Riegelelementen sein können, was deren Anschlag am Flügel in der zweiten Montagephase wesentlich erleichtert. Es muß nicht mehr eine vorgegebene Riegelposition (im Verhältnis zu einem festrahmenseitigen Schließblech) beim Anschlagen des Verbindungselementes eingehalten werden.

Um einerseits für zuverlässige Verriegelung mit Auszugssicherung zu sorgen und zum anderen eine Verstellung des Flügelandrucks u.U. auch nach längerem Gebrauch zu ermöglichen, wird vorgeschlagen, daß eines der beiden Verriegelungselemente pilzkopfförmig und vorzugsweise das andere Verriegelungselement quer zur Längsmittelebene wahlweise verstellbar ausgebildet ist.

Eine derartige Eckumlenkung ist zur Winkelhalbierungsebene asymmetrisch ausgebildet. Bei derartigen Eckumlenkungen wird erfindungsgemäß vorgeschlagen, daß die Eckumlenkungen am Flügel derart angeschlagen werden, daß, bezogen auf eine Umlaufrichtung längs der Flügelfalzumfangsfläche, stets der gleiche Eckumlenkungsschenkel in Umlaufrichtung weist. Die dem Montageautomaten in gleicher Orientierung (insbesondere im Magazin) zugeführten Eckumlenkungen brauchen dann bei der Montage vom Montageautomaten nicht gedreht werden, sondern können stets in gleicher Orientierung angeschlagen werden.

Damit der Montageautomat nicht nur das Anlegen der Eckumlenkungen an den Flügel, sondern auch die Befestigung am Flügel (durch Festschrauben) durchführen kann, wird vorgeschlagen, daß der Montageautomat wenigstens ein Schraubaggregat mit automatischer Schraubenzuführung aufweist.

Prinzipiell ist es möglich, sämtliche Eckumlenkungen gleichzeitig durch eine entsprechende Vielzahl von Montageköpfen am Flügel anzubringen. Da jedoch ausreichend Zeit für ein serielles Anschlagen der Ecklager zur Verfügung steht, wird zur Reduzierung des apparativen Aufwands vorgeschlagen, daß der Montageautomat aufgrund entsprechender Relativbewegung zum Flügel nacheinander an den erforderlichen Ecken des Flügels positioniert wird zur nachfolgenden Befestigung der jeweiligen Eckumlenkung am Flügel. Es ist somit lediglich ein einziger Montageautomat erforderlich.

In einer ersten Ausführungsform der Erfindung ist vorgesehen, daß in der ersten Montagephase der Flügel auf einer ortsfesten Montagehalterung festgespannt wird und der Montageautomat von Flügelecke zu Flügelecke bewegt wird. Um die erforderliche Bewegung des Montageautomaten von Flügelecke zu Flügelecke mit baulich einfachen Mitteln bei zuverlässiger Funktion sicherzustellen, wird vorgeschlagen, daß der Montageautomat einen Montagekopf aufweist, der an einer den Flügel überspannenden, seitlich verfahrbaren Brücke um eine zur Flügelebene im wesentliche senkrechte Achse drehbar sowie in Brückenlängsrichtung verschiebbar angeordnet ist.

Alternativ hierzu ist jedoch auch möglich, daß in der ersten Montagephase der Flügel auf einer um eine zur Flügelebene im wesentlichen senkrechten Achse drehbaren Montagehalterung festgespannt ist, und die Montagehalterung nacheinander die verschiedenen Flügelecken zum Montageautomaten hin bewegt. Bevorzugt ist hierbei vorgesehen, daß der Montageautomat einen um eine Achse zwischen einer Magazin-Drehstellung und einer Montage-Drehstellung drehbaren und in radialer Richtung hin und her bewegbaren Montagekopf aufweist.

Bei dieser Lösung ist der Bauaufwand und Steuerungsaufwand für den Montageautomaten reduziert, da dieser praktisch ortsfest ist (bis auf die Drehung und Radialverschiebung bezüglich der ortsfesten Achse). Die Montagehalterung übernimmt die Flügelbewegung, wozu sie dementsprechend drehbar und, bei von der Quadratform abweichender Flügelform, in der Flügelebene seitlich verschiebbar auszubilden ist.

Ferner wird vorgeschlagen, daß ein bzw. der Montagekopf des Montageautomaten eine zwischen einer Montagevorbereitungsstellung und einer Montagestellung bewegbare Halterung für die Eckwinkel aufweist, wobei der Eckwinkel in der Montagevorbereitungsstellung im Bereich des jeweiligen Flügelecks jedoch außerhalb einer Eckwinkel-Aufnahmenut, dagegen in der Montagestellung innerhalb der Aufnahmenut angeordnet ist. Die bewegbare Halterung für den Eckwinkel ermöglicht ein feinfühliges Einschieben des Eckwinkels in die Aufnahmenut, ohne daß größere Massen wie Flügel oder Montageautomat insgesamt zu bewegen sind.

Einfache Bewegungsmechanik bei zuverlässigem Einschieben des Eckwinkels in die Aufnahmenut wird dadurch sichergestellt, daß die Halterung im wesentlichen in Richtung der Winkelhalbierenden des Ecklagers zwischen der Montagevorbereitungsstellung und der Montagestellung bewegbar ist.

Die momentane Fixierung des jeweiligen Eckwinkels am Montagekopf kann durch entsprechende Greifwerkzeuge erfolgen oder durch Vakuum-Saugköpfe. Besonders einfacher Aufbau bei zuverlässiger Funktion wird jedoch dadurch sichergestellt, daß ein bzw. der Montagekopf des Montageautomaten eine Magnethalterung für die Eckwinkel aufweist.

Ferner wird vorgeschlagen, daß in der zweiten Montagephase die Verbindungselemente manuell oder mittels Montageautomaten an den Flügel angelegt werden, ggf. nach vorheriger Ablängung, und dann mittels Befestigungsautomaten, insbesondere Schraubaggregat, am Flügel befestigt werden. Ohne allzu großen Automatisierungsaufwand kann aufgrund dieser Maßnahmen eine kurze Taktzeit auch in der zweiten Montagephase eingehalten werden, da der jeweilige Arbeitsvorgang in einen auch manuell durchführbaren Teilvorgang (Anlegen am Flügel ggf. nach vorheriger Ablängung) und einen ohne weiteres automatisch durchführbaren Teilvorgang (Schraubbefestigung am Flügel) unterteilt wird. Der zweite Teilvorgang ist weitgehend vom jeweiligen Beschlagssystem unabhängig; im Falle einer Abhängigkeit vom jeweiligen Flügelmaß kann das Flügelmaß durch einfaches Abtasten ermittelt und zur Positionssteuerung des Schraubaggregats verwendet werden. Dieses kann hierzu parallel zur Kante des ihm jeweils gegenüberliegenden Flügels verschiebbar ausgebildet sein, wodurch man u.U. auch mit einem einzigen Schraubaggregat auskommt.

Ferner wird vorgeschlagen, daß in der zweiten Montagephase in einem ersten Schritt ein erstes Verbindungselement an den Flügel angelegt wird, daß in einem zweiten Schritt ein zweites Verbindungselement an den Flügel angelegt und das erste Verbindungselement von einem bzw. dem Schraubaggregat selbsttätig am Flügel befestigt wird, daß ggf. in einem dritten Schritt ein drittes Verbindungselement angelegt und das zweite Verbindungselement befestigt wird, daß ggf. in einem vierten Schritt ein viertes Verbindungselement angelegt und das dritte Verbindungselement befestigt wird und daß im jeweils letzten Schritt das vorletzte Verbindungselement befestigt wird. Ab dem zweiten Schritt erfolgt also das Anlegen des jeweiligen Verbindungselements in zeitsparender Weise gleichzeitig mit dem selbsttätigen Befestigen des im vorangehenden Schritt angelegten Verbindungselementes. Dies ist ohne weiteres gleichzeitig möglich, da diese beiden Verbindungselemente jeweils an unterschiedlichen Rändern des Flügels angeordnet sind. Das ist vor allem bei dem bevorzugten manuellen Anlegen der Verbindungselemente von Vorteil, da sich dann Montage-Person und Befestigungsautomat nicht gegenseitig stören.

Wenn alternativ hierzu auch das Anlegen mittels Montageautomaten erfolgt, kann das Anlegen und das Befestigen auch im gleichen Schritt, d.h. am selben Rand des Flügels erfolgen. Dies reduziert den Bauaufwand.

Besonders bevorzugt vorgesehen ist hierbei, daß der Flügel zwischen den Schritten jeweils um 90° gedreht wird. Sowohl das Schraubaggregat als auch die Montageperson bzw. der Montageautomat zum Anlegen der jeweiligen Verbindungselemente können ihren Standort beibehalten, da der Flügel dementsprechend zwischen den Schritten gedreht wird.

In einer bevorzugten Ausführungsform weist der Montageautomat eine Zuführeinheit auf zur wahlweisen Entnahme des jeweiligen Verbindungselements aus einer Magazineinheit. Die Magazinierung der Verbindungselemente erleichtert deren Handhabung. Günstig ist es hierbei, wenn die mehrere verschiedene Abteile für die unterschiedlichen Verbindungselemente aufweisende Magazineinheit gegenüber einem Entnahmekopf der Zuführeinheit abteilweise verfahrbar ist. Die Verbindungselemente können daher unabhängig von der Reihenfolge der Entnahme typweise in den einzelnen Abteilen magaziniert werden. Das jeweils benötigte Verbindungselement wird durch entsprechende Verschiebung (z. B. Linearbewegung oder Rotation) an den Entnahmekopf herangefahren. Man erspart sich einen entsprechend aufwendig zu bauenden und zu programmierenden Roboterarm mit vergleichsweise großer Reichweite zur individuellen Auswahl der Verbindungselemente.

Beim Anschlag der Verbindungsteile kommt es vor, daß gleiche Verbindungsteile in unterschiedlicher Orientierung am Flügel anzuschlagen sind. Dies gilt beispielsweise für Verbindungselemente in Form der sog. Zusatzverriegelung, die sowohl am drehachsenseitigen Vertikalholm als auch, mit vertauschten Enden, am unteren Horizontalholm anzuschlagen sind. Um dies ohne Verdrehung von Magazin- bzw. Flügel zu ermöglichen, wird vorgeschlagen, daß die Zuführeinheit zur wahlweisen Drehung eines dem Magazin entnommenen Verbindungsteils im Sinne einer Vertauschung der beiden Enden des Verbindungsteils ausgebildet ist.

Hierzu wird vorgeschlagen, daß der Montageautomat einem Roboterarm mit zwei verschiedenen Drehachsen und vorzugsweise veränderbarer Armlänge aufweist. Das freie Ende des Roboterarms kann als Halterung, vorzugsweise Magnethalterung, für die Verbindungselemente ausgebildet sein zur Entnahme aus der Magazineinheit und zum Anlegen am Flügel. Der Roboterarm dient somit sowohl als Zuführeinheit als auch als Anlegeeinheit.

Die Erfindung betrifft auch ein Beschlagssystem, insbesondere Dreh-Kipp-Beschlagssystem oder Drehbeschlagssystem für Fenster, Türen oder dergleichen, umfassend baugleiche Eckumlenkungen an wenigstens zwei Flügelecken und mit den Eckumlenkungen verbundene Verbindungsstücke, zur Durchführung des Verfahrens nach einem der vorhergehenden Ansprüche.

Zu Aufbau und Funktion der im Zusammenhang mit dem vorstehend beschriebenen Verfahren bevorzugt eingesetzten Beschlagssystem wird ausdrücklich auf die am selben Tage wie die vorliegende Anmeldung eingereichten deutschen Patentanmeldungen mit dem Titel "Teilautomatisch anschlagbares Beschlagsystem für Fenster, Türen oder dergleichen" bzw. "Dreh-Kipp-Beschlag für Fenster, Türen oder dgl." verwiesen, deren Inhalt zum Offenbarungsgehalt der vorliegenden Anmeldung zählt.

Die Erfindung wird im folgenden an bevorzugten Ausführungsbeispielen anhand der Zeichnung erläutert. Es zeigt:
- Figur 1: eine stark vereinfachte Draufsicht auf eine Eckumlenkungs-Anschlagssektion einer Flügelherstellungs- und Montagestraße zu Beginn einer Montagephase;
- Figur 2: einen vergrößerten Teilschnitt einer Flügel-Aufspanneinrichtung der Anordnung in Fig. 1 (Schnitt II-II in Fig. 1);
- Figur 3: eine Ansicht entsprechend Fig. 1 während des Anschlags einer ersten Eckumlenkung;
- Figur 4: einen vereinfachten Detailschnitt nach Linie IV-IV der Anordnung in Fig. 3;
- Figur 5: eine Ansicht entsprechend den Fig. 1 und 3 während des Anschlags einer zweiten Eckumlenkung;
- Figur 6: eine vereinfachte vergrößerte Unteransicht eines Montagekopfs der Anordnung in den Fig. 1, 3 und 5;
- Figuren 7 und 8: ausschnittsweise Ansichten entsprechend den Fig. 1, 3 und 5, jedoch während des Anschlags einer dritten Eckumlenkung (Fig. 7) bzw. vierten Eckumlenkung (Fig. 8);
- Figur 9: eine zweite Ausführungsform einer erfindungsgemäßen Eckumlenkungs-Anschlagssektion innerhalb einer Flügelherstellungs- und Montagestraße zu Beginn einer Montagephase;
- Figur 10: die Anordnung gemäß Fig. 9 während des Anschlags einer ersten Eckumlenkung;
- Figur 11: die Anordnung gemäß den Fig. 9 und 10, jedoch während des Anschlags einer zweiten Eckumlenkung; die
- Figuren 12 u. 13: eine Draufsicht auf eine drehbare Montagehalterung in geöffnetem Zustand (Fig. 12) bzw. in geschlossenem Zustand zum Fixieren eines Flügels (Fig. 13);
- Figur 14: eine Draufsicht auf eine sich an die Eckumlenkungs-Anschlagssektion gemäß den vorhergehenden Figuren anschließenden teilautomatische Verbindungselement-Anschlagssektion während eines ersten Verfahrensschrittes; die
- Figuren 15-17: die Anordnung gemäß Fig. 14 während eines nachfolgenden zweiten bzw. dritten bzw. vierten Schrittes;
- Fig. 18: die Draufsicht auf eine gegenüber der Verbindungselement-Anschlagssektion der Fig. 14 bis 17 abgewandelte vollautomatische Verbindungselement-Anschlagssektion bei der Ankunft eines Flügelrahmens; die
- Fig. 19, 20 u. 21: die Anordnung gemäß Fig. 18 während eines ersten, zweiten und dritten Schrittes.

Flügel bzw. Flügelrahmen von Fenstern oder Türen werden heutzutage teilautomatisch oder vollautomatisch aus den entsprechenden Rahmenprofilen hergestellt. Häufig wird hierbei taktweise vorgegangen, wobei in einer Stufe beispielsweise die Kunststoff- oder Aluminiumholme des Flügelrahmens verschweißt werden und in der nachfolgenden Putzstufe die Schweißnähte egalisiert werden. Die Taktzeit liegt beispielsweise bei 2 Minuten.

Erfindungsgemäß geht es darum, an diese Herstellungsstraße unmittelbar eine Anschlagsstraße folgen zu lassen, die im selben Zeittakt arbeitet. Dabei soll der Geräte- und Steuerungsaufwand für die Montagestraße trotz der Vielfalt an Flügelformaten und Beschlagssystemen möglichst klein gehalten werden, damit auch mittelständische Firmen weiterhin für die Flügelherstellung und Beschlagsmontage in Frage kommen.

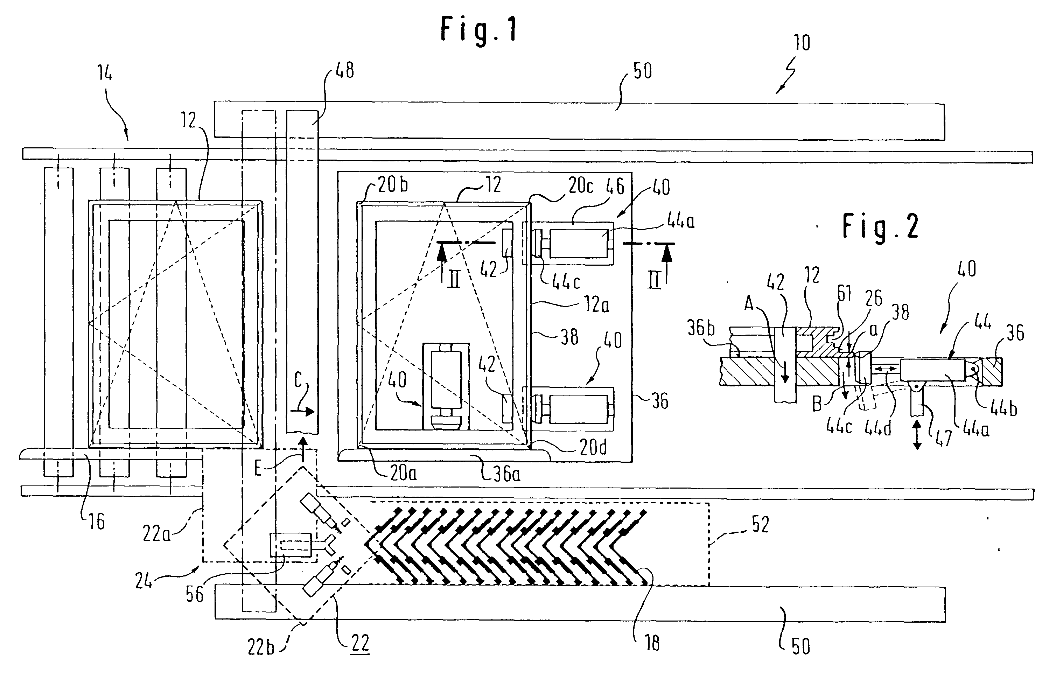

Die Fig. 1 zeigt eine Ecklager-Anschlagssektion 10 einer Flügelherstellungs-und -montagestraße, die sich an die Flügelherstellungssektionen anschließt. Man erkennt zwei mit 12 bezeichnete Flügelrahmen, bei denen in üblicher Weise mit unterbrochener Linie die vorgesehene Anschlagsart symbolisiert ist (hier Dreh-Kipp mit rechtsliegender Drehachse und in Fig. 1 untenliegender Kippachse). Über eine schematisch angedeutete Rollbahn 14 werden die Flügelrahmen 12 taktweise heranbefördert und nach Anschlagen der vorgesehenen Ecklager (Fig. 1, 3, 5, 7 und 8) in nicht dargestellter Weise weiterbefördert. Eine Anschlagsleiste 16 sorgt für die Beibehaltung der Flügelrahmenorientierung während des Transportes zwischen den Sektionen.

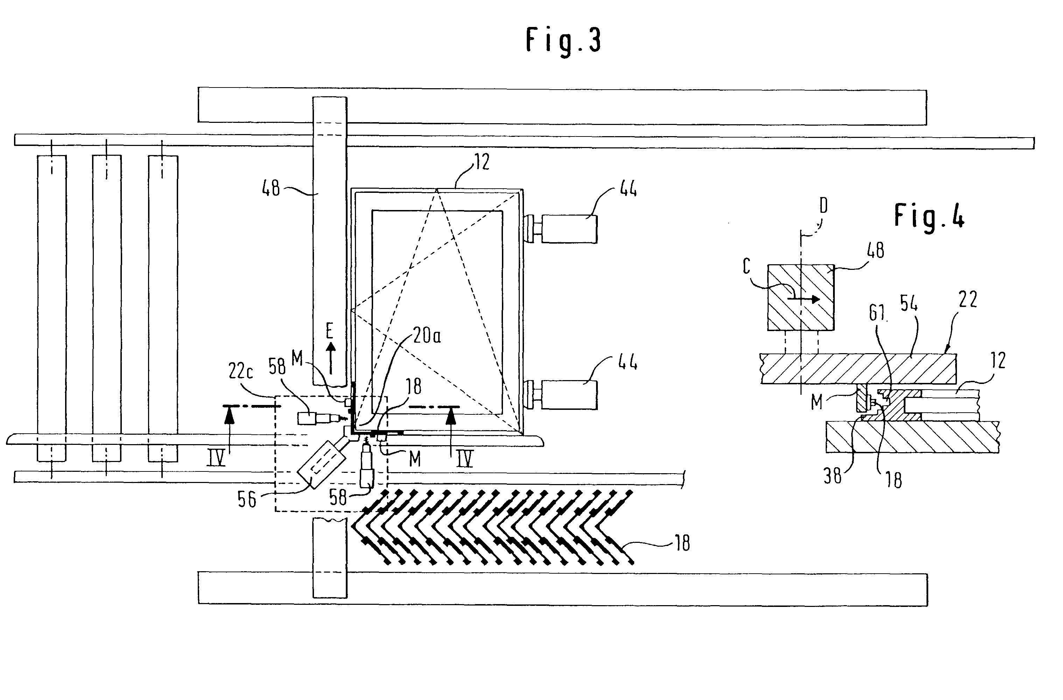

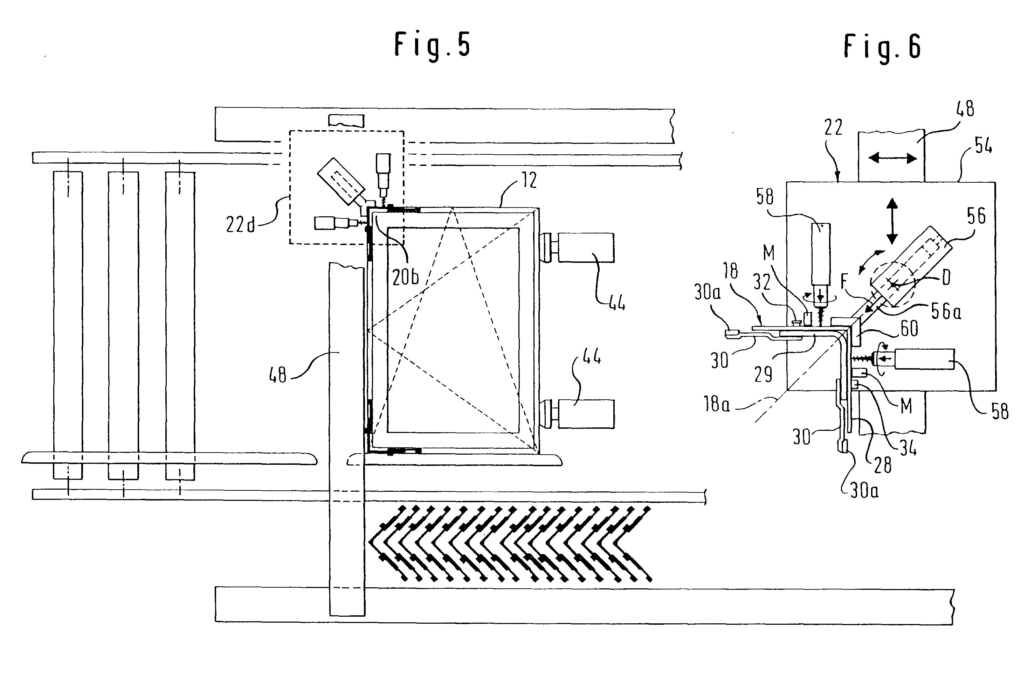

In der Ecklager-Anschlagssektion 10 erfolgt ein automatischer Anschlag von Ecklagern 18, wobei unabhängig vom Flügelrahmenformat und Beschlagssystem stets die gleichen Ecklager 18 eingesetzt werden. Gemäß den Fig. 3, 5, 7 und 8 werden die Ecklager 18 an aufeinanderfolgenden Flügelecken 20a bis 20d angeschlagen. Hierbei werden die Ecklager 18 in stets gleicher Raumorientierung einem Montagekopf 22 eines allgemein mit 24 bezeichneten Montageautomaten zugeführt. Der Montagekopf 22 montiert die Ecklager 18, ohne diese um eine Winkelhalbierungsachse 18a (siehe Fig. 6) zu drehen, an die jeweilige Flügelecke 20a bis 20d. Hieraus ergibt sich, daß die Ecklager 18 jeweils in bezug auf eine Umlaufrichtung längs einer Flügelfalzumfangsfläche 26 stets gleich orientiert sind, d.h. es weist stets der gleiche Eckumlenkungsschenkel in Umlaufrichtung.

Der prinzipielle Aufbau der Eckumlenkung geht aus Fig. 6 hervor. Man erkennt einen Eckwinkel 28, der an seiner Innenseite ein entsprechend winkelförmiges C-Profil 29 trägt. In diesem ist ein nicht erkennbares Kraftübertragungsglied, insbesondere in Form zweier Federblechstreifen, verschiebbar gelagert, welches der Kraftumlenkung dient. Hierzu ist an seinen beiden Enden jeweils ein Treibstangenkopplungselement 30 befestigt, jeweils mit einem Kopplungsteil 30a am freien Kopplungsteilende. Nach dem Anschlagen der Ecklager 18 in der Sektion 10 erfolgt in der noch später zu beschreibenden Verbindungselement-Anschlagssektion die Verkopplung des jeweiligen Treibstangenabschnitts eines Verbindungselements mit dem Kopplungsteil 30a und die Verbindung des entsprechenden Stulpschienenabschnitts des Verbindungselements mit dem freien Ende des jeweiligen Schenkels des Eckwinkels 28.

Als Verbindungselement von Kraftübertragungsglied und Kopplungsteil 30a dient jeweils ein Bolzen, der bei dem in Fig. 6 obenliegenden horizontalen Eckwinkelschenkel von einem über den Eckwinkel 28 vorstehenden Pilzkopf 32 gebildet ist und beim anderen Schenkel von einem Exzenterbolzen 34. Der Pilzkopf 32 wirkt mit im Querschnitt C-profilförmigen festrahmenseitigen Schließblechen zusammen bzw. mit einem entsprechenden Teil an der Unterseite eines Ausstellarms, was für zuverlässigen Zusammenhalt dieser Teile sorgt, insbesondere für eine Aushebesicherung bzw. Einbruchssicherung. Der Exzenterbolzen 34 ermöglicht die Einstellung eines gewünschten Flügelandrucks. Ergänzend wird auf die bereits vorstehend erwähnte, am selben Tag wie die vorliegende Anmeldung eingereichte deutsche Patentanmeldung mit dem Titel "Teilautomatisch anschlagbares Beschlagssystem für Fenster, Türen oder dgl." verwiesen.

Bei der Montage der Ecklager 18 wandert der Montagekopf 22 gemäß den Fig. 1 bis 8 um den ortsfest gehaltenen Flügelrahmen 12 herum. Eine entsprechende Montagehalterung 36 für den Flügelrahmen 12 kann daher von einem einfachen Montagetisch gebildet sein. Eine Leiste 36a am in Fig. 1 unteren Rand der Montagehalterung 36 sorgt für die gewünschte Raumorientierung des Flügelrahmens 12. Die Höhe der Leiste 36a entspricht im wesentlichen der Dicke a eines in Fig. 2 angedeuteten, um den Flügelrahmen herumlaufenden Flügelüberschlag 38, um nicht in Kollision mit dem Montagekopf 22 und dem jeweils anzuschlagenden Ecklager 18 zu geraten.

Die Fixierung des Flügelrahmens 12 auf der Tischoberfläche 36b der Montagehalterung 36 kann in üblicher Weise erfolgen, wie z.B. durch Vakuum-Saugköpfe. In den Fig. 1 und 2 ist eine einfache mechanische Flügelaufspanneinrichtung 40 angedeutet. Man erkennt zum einen einen senkrecht zur Oberseite 36b bewegbaren Anschlagsschieber 42, an den der entsprechende in Fig. 1 von oben nach unten verlaufende Flügelrahmenholm 12a mit seiner Innenseite drückbar ist. Hierzu dient eine Kolbenstange-Zylindereinheit 44, deren Zylinder 44a innerhalb einer Ausnehmung 46 der Montagehalterung 36 angeordnet und um eine zur Längsrichtung des Holms 12a parallele Achse 44b mit Hilfe eines an den Zylinder 44a angreifenden Hebels 47 verschwenkbar ist. Ein Spannkopf 44c am freien Ende einer Kolbenstange 44d der Kolbenstange-Zylindereinheit 44 drückt in der in Fig. 2 dargestellten Schwenkstellung der Kolbenstange-Zylindereinheit 44 gegen den Flügelüberschlag 38 und damit gegen den Anschlagsschieber 42. Es können zwei oder mehr (in Fig. 1 drei) derartige Aufspanneinrichtungen 40 vorgesehen sein.

Um beim Antransport bzw. Abtransport des Flügelrahmens 12 diesen auf der Oberseite 36b ohne weiteres verschieben zu können, wird vorher zum einen der Anschlagsschieber 42 aus der in Fig. 2 dargestellten Einsatzposition nach unten in eine Freigabeposition bewegt und dementsprechend auch die Kolbenstange-Zylindereinheit 44 nach unten verschwenkt (Bewegungspfeile A und B).

Für die erforderliche Bewegungsführung des Montagekopfs 22 weist der Montageautomat 24 eine den Flügelrahmen 12 überspannende Brücke 48 auf, die auf einer Längsführung (durch zwei seitliche Schienen 50 symbolisiert) in Brückenquerrichtung (Pfeil C in Fig. 2 und 4) hin und her verfahrbar ist. An der Unterseite der Brücke 48 ist der Montagekopf 22 sowohl um eine zur Flügelrahmenebene senkrechte Drehachse D verdrehbar als auch in Brückenlängsrichtung (Pfeil E in den Fig. 1 und 3) hin und her verfahrbar.

In der Fig. 1 ist sowohl eine Ausgangsposition 22a des Montagekopfs 22 mit einer Strich-Punkt-Umrißlinie angedeutet, wie auch eine Magazinentnahmeposition am in Fig. 1 linken Ende eines die Eckwinkel 18 aufnehmenden mit Strich-Punkt-Umrißlinie angedeuteten Magazins 52. Die Fig. 3, 5, 7 und 8 zeigen Anschlagsposition 22c bis 22f an den vier Flügelecken 20a bis 20d.

Die Aufgabe des Montagekopfs 22 besteht in der Aufnahme jeweils eines Ecklagers 18, der Positionierung am jeweiligen Flügelrahmeneck und im nachfolgenden Festlegen am Flügel. Hierzu weist der Montagekopf gemäß den Fig. 4 und 6 eine Kopfplatte 54 auf, an deren von der Brücke 48 abgewandten Unterseite eine bewegbare Halterung 56 für den jeweiligen Eckwinkel 18, zwei Anschlagsmagnete M für den Eckwinkel 18 sowie zwei Schraubaggregate 58 mit automatischer Schraubenzuführung angebracht sind. Die Anschlagsmagnete M können unter Umständen entfallen, wenn ein Halterungskopf 60 der bewegbaren Halterung 56 dementsprechend vergrößert ist zur zuverlässigen momentanen Fixierung des jeweiligen Eckwinkels 18. Unter Umständen können die Magnethalterungen M auch entsprechend der bewegbaren Halterung 56 bewegbar ausgebildet sein. Der Grund für die bewegbare Ausbildung zumindest des bewegbaren Halters 56 ist der, daß dann eine Grobpositionierung des Montagekopfs 54 gegenüber dem Flügelrahmen 12 mit Hilfe der Brücke 48 möglich ist (Montagevorbereitungsstellung gemäß Fig. 4), in der das Ecklager 18 sich unmittelbar vor der üblichen abgestuften Eckwinkelaufnahmenut (= Umfangsfalznut zur Aufnahme des Treibstangenbeschlags) 61 liegt. Aus dieser Montagevorbereitungsstellung wird dann der Eckwinkel durch entsprechende Bewegung des Halterungskopfs 60 in Richtung der Winkelhalbierenden 18a (Pfeil F) bewegt, bis der Eckwinkel 18 sich innerhalb der Aufnahmenut 61 befindet.

Hierzu kann die bewegbare Halterung 56 wiederum als Kolbenstange-Zylindereinheit ausgebildet sein, wobei am freien Ende der Kolbenstange 56a der Halterungskopf 60 angeordnet ist. Dieser greift genau an das außenliegende Winkeleck des Eckwinkels 28 der Eckumlenkung 18 an und ist hierzu dementsprechend winkelförmig ausgebildet. Um die Eckumlenkung 18 momentan zu halten, kann der Kopf 60 wiederum magnetisch ausgebildet sein. Es sind jedoch auch andere Fixierungsarten denkbar, wie z.B. mechanische Fixierungen, wozu der Eckwinkel 28 im Eckbereich mit dementsprechenden Vorsprüngen oder Ausnehmungen zu versehen ist, in die mechanische Fixierungselemente momentan eingreifen.

Der Montageablauf in der ersten Montagephase, in der sämtliche Eckumlenkungen 18 automatisch angeschlagen werden, geht aus den Fig. 1, 3, 5, 7 und 8 hervor. In der Ausgangsstellung 22a des Montagekopfes 22 in Fig. 1 erfolgt die Zuführung des Flügelrahmens 12 in eine Position oberhalb der Spannvorrichtungen 40 (beispielsweise mit Hilfe eines nicht dargestellten Schubarms). Die Spannvorrichtungen 40 treten dann in der beschriebenen Weise in Aktion, indem die Schieber 42 in Fig. 2 nach oben gefahren werden, ebenso wie die Spannköpfe 44c mit anschließendem Ausschub der Kolbenstangen 44d zum Einspannen des entsprechenden Rahmenholms 12a.

Gleichzeitig bewegt sich der Montagekopf 22 in die Magazinentnahmeposition 22b gemäß Fig. 1 zur Aufnahme eines Ecklagers 18. Nachfolgend wird die erste Flügelecke 20a gemäß Fig. 3 angefahren, bis der Eckwinkel 18 die Montagevorbereitungsstellung gemäß Fig. 4 erreicht hat. Anschließend wird der Eckwinkel 18 mit Hilfe der bewegbaren Halterung 56 in die Nut 61 eingeschoben, wobei nicht dargestellte Ortsfühler für eine stets exakte Eckwinkelpositionierung sorgen. Anschließend treten die beiden Schraubaggregate 58 in Aktion zur entsprechenden Schraubbefestigung des Eckwinkels 18 im Nutgrund der Nut 61.

Anschließend fährt der Montagekopf 22 wieder in seine Magazinentnahmestellung 22b zur Entnahme des nächsten Ecklagers 18. Dann fährt der Montagekopf die nächste Flügelecke 20b an zur dortigen Montage des Eckwinkels 18 gemäß Fig. 5.

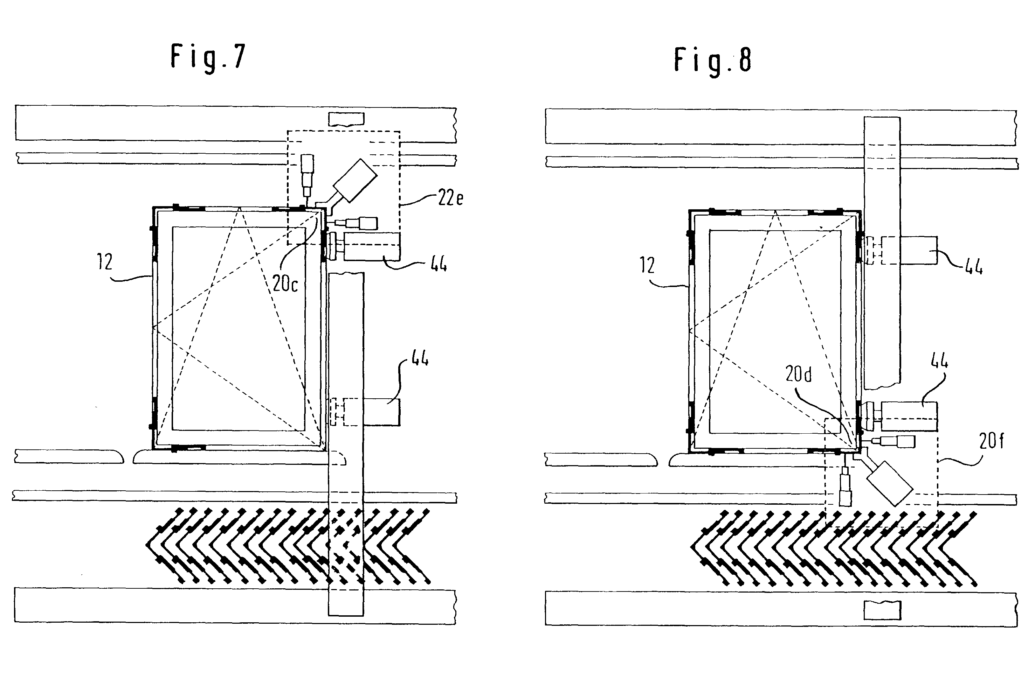

In der gleichen Weise werden dann die Ecklager 18 an die Flügelecken 20c und 20d gemäß den Fig. 7 und 8 befestigt.

Nachfolgend werden die Spannvorrichtungen 40 wieder gelöst und der mit den Eckumlenkungen 18 beschlagene Flügelrahmen weitertransportiert, um dann mit den restlichen Beschlagsteilen, nämlich den Verbindungselementen (ist gleich Langteile) beschlagen zu werden.

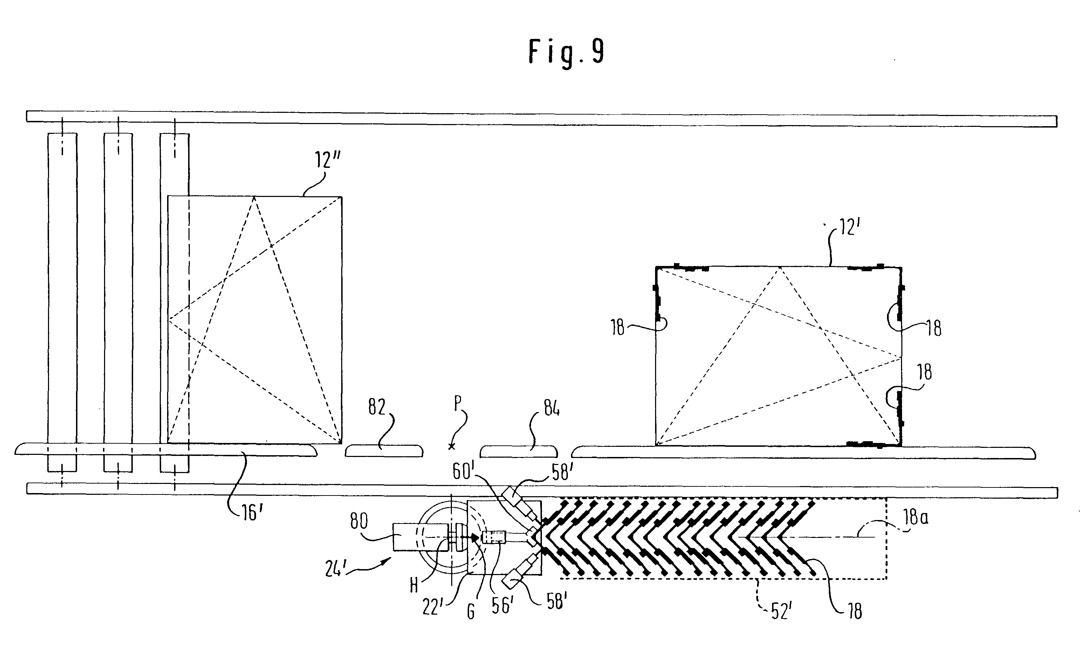

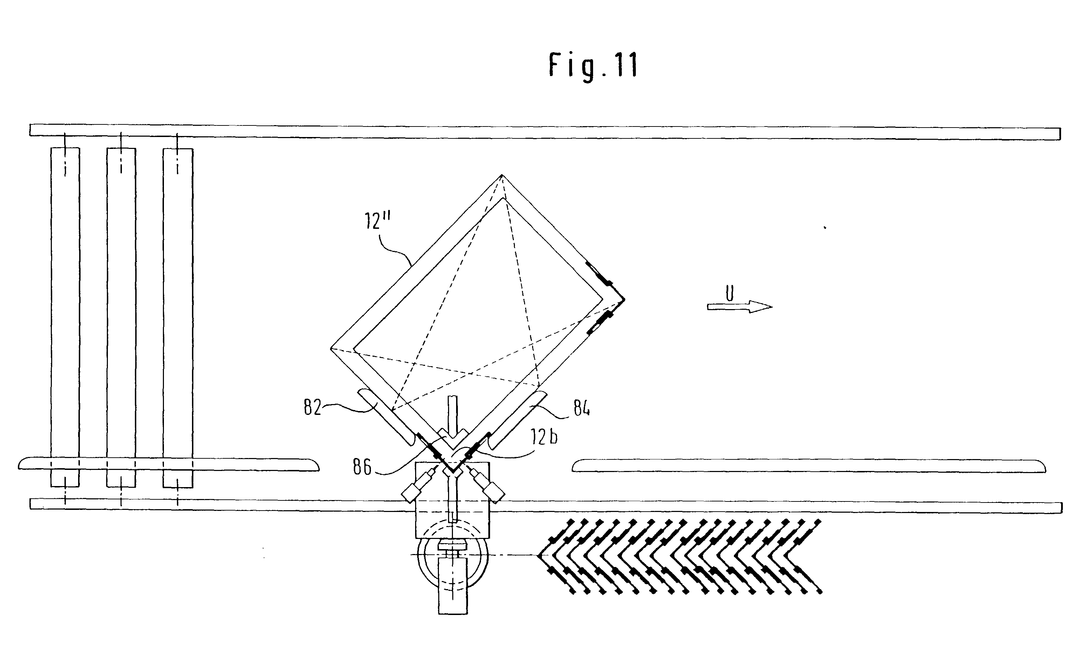

In der in den Fig. 9 bis 13 dargestellten Ausführungsform der Erfindung wird wiederum lediglich ein Montageautomat 24' mit einem einzigen Montagekopf 22' eingesetzt, jedoch in diesem Falle nicht von Rahmenecke zu Rahmenecke bewegt, sondern umgekehrt der Rahmen schrittweise gedreht, damit dem Montageautomaten 24' jeweils das gewünschte Rahmeneck gegenüberliegt. Ansonsten ist der Aufbau im wesentlichen gleich, so daß auf die Beschreibung der Fig. 1 bis 9 verwiesen wird. Bauelemente, die ihrer Funktion nach solchen in den Fig. 1 bis 9 entsprechen, tragen die selben Bezugsziffern, jedoch versehen mit einem '.

Der Montagekopf 22' hat prinzipiell gleichen Aufbau wie der Montagekopf 22. Es ist also auch hier eine bewegbare Halterung 56' vorgesehen, dessen an die Außenecke der Eckumlenkung 18 angreifender, insbesondere magnetischer Kopf 60' längs der Winkelhalbierenden 18a der Eckumlenkungen 18 zwischen der Montagevorbereitungsstellung und der Montagestellung bewegbar ist, gegebenenfalls noch in eine Magazinentnahmestellung jenseits der Montagestellung, so daß unter Umständen die dargestellte Kolbenstange-Zylindereinheit 80 zur wahlweisen Radialbewegung des Montagekopfes 22' (Pfeil G in Fig. 9) entfallen kann. Es genügt dann die dargestellte Drehlagerung des Montagekopfes 22' um eine zur Flügelebene senkrechte Drehachse H.

In Fig. 9 ist zum einen der Abtransport eines bereits mit drei Eckumlenkungen 18 beschlagenen Flügelrahmens 12' angedeutet, wie auch der Antransport eines noch unbeschlagenen Flügelrahmens 12".

Sobald der Flügelrahmen 12" den Bereich des Montageautomaten 24' erreicht hat, wird er derart positioniert, daß sein Flügeleck 12a dem nach oben geschwenkten Montagekopf 22' genau gegenüberliegt, so daß dann in der schon anhand des ersten Ausführungsbeispiels beschriebenen Art und Weise der erste Ecklager 18 angeschlagen werden kann. Die Winkelhalbierende 12aa des Flügelecks 12a fällt nunmehr zusammen mit der Längsrichtung des Montagekopfs 22', die mit dem Pfeil G in Fig. 9 zusammenfällt bzw. mit einem Radialstrahl der Drehachse H durch den Kopf 60'. Um die Drehbewegung des Flügelrahmens 12 nicht zu behindern, kann die bewegbare Halterung 56'auch in eine nicht dargestellte Rückzugsstellung jenseits der Montagevorbereitungsstellung in Richtung zur Drehachse H bewegbar sein, in der der Kopf 60' samt soeben aufgenommenem Ecklager 18 auch an den Ecklagern 18 im Magazin 52' vorbei verschwenkt werden kann. Für den Fall des Einsatzes der Kolbenstange-Zylindereinheit 80, kann diese Rückzugsbewegung auch von der Einheit 80 übernommen werden.

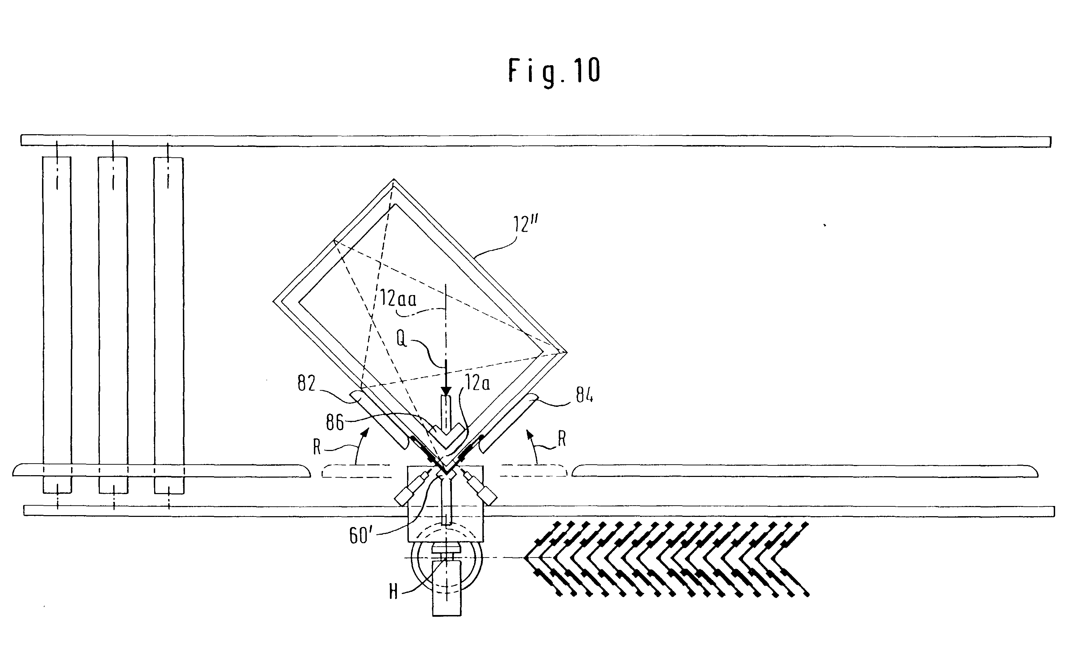

Gemäß den Fig. 9 und 10 kann die Drehung des Flügelrahmens aus der aufrechten Position gemäß Fig. 9 in die verkippte Position gemäß Fig. 10 dadurch unterstützt werden, daß bewegbare Anschlagsleisten 82, 84 aus ihrer in Fig. 9 dargestellten Ausgangslage in Flucht mit der vorangehenden ortsfesten Anschlagsleiste 16' jeweils um ca. 45° um einen Drehpunkt P zwischen beiden Leisten 82, 84 nach oben geschwenkt werden zur Anlage an den entsprechenden Flügelrahmenholmen des Flügelrahmens 12". Gleichzeitig wird ein an der Innenseite des Rahmenecks 12a angreifender, dementsprechend winkelig zugespitzter Spannkopf 86 in Richtung der Winkelhalbierenden 12aa in Fig. 10 nach unten verschoben (Pfeil Q). Auf diese Weise erhält der Flügelrahmen 12" die gewünschte Orientierung und Fixierung.

Nach dem Anschlag des ersten Eckwinkels 18 erfolgt eine Drehung des Flügelrahmens 12" derart, daß die nächste Flügelecke 12b dem Montagekopf 22' gegenüberliegt, wozu eine in den Fig. 9 bis 11 nicht näher dargestellte bewegbare Montagehalterung eingesetzt wird. Die genaue Positionierung und Fixierung in der jeweiligen Anschlagsposition wird dann wiederum durch die beiden beweglichen Anschlagsleisten 82, 84 übernommen, die zwischenzeitlich in ihrer Ausgangslage zurückbewegt und dann wieder in ihre Montageposition gemäß Fig. 10 zurückbewegt werden (Pfeile R). Der Spannkopf 86 sorgt für die nötige Rahmenfixierung.

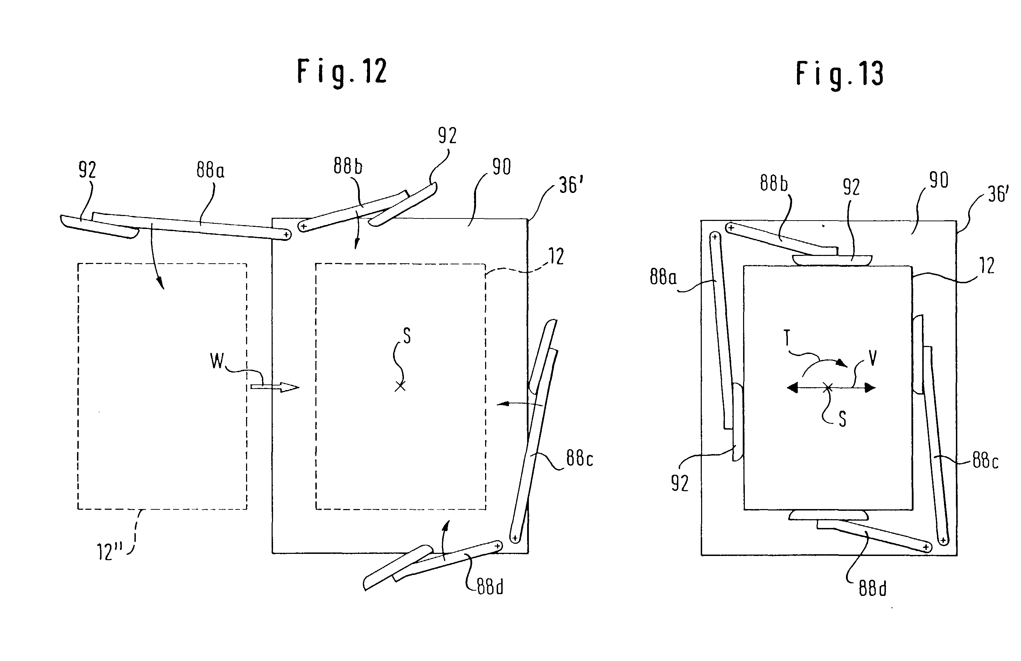

In den Fig. 12 und 13 ist eine mögliche Ausgestaltung einer, um eine Achse S drehbaren Montagehalterung 36' angedeutet, wobei die Drehachse S hier mit dem diagonalen Schnittpunkt des zu transportierenden Flügelrahmens 12 zusammenfällt.

Die Montagehalterung 36' weist vier Spannhebel 88a, 88b, 88c und 88d auf, die jeweils paarweise an einander diametral gegenüberliegenden Ecken eines rechteckigen Auflagetisches 90 der Montagehalterung drehbar gelagert sind. Ihre freien Enden sind jeweils mit einem Spannkopf 92 versehen zur Anlage an jeweils einem der vier Rahmenholme des Flügelrahmens 12 im Bereich von deren Längenmitte (siehe Fig. 13). Die an den beiden längeren Holmen (Vertikalholme) des Flügelrahmens 12 angreifenden Spannhebel 88a und 88c können auch etwas länger ausgebildet sein.

Zur Aufnahme eines mit den Ecklagern zu beschlagenden Flügelrahmens 12" werden die Spannarme gemäß Fig. 12 dementsprechend zurückgeschwenkt, damit der Flügelrahmen 12" durch nicht dargestellte Schieber auf den Auflagetisch 90 geschoben werden kann (Pfeilrichtung W). Anschließend werden die Spannarme 88a bis 88d in Richtung auf die Drehachse S nach innen verschwenkt bis zur Anlage an den Seitenholmen des Flügelrahmens 12" bzw. am Außenrand des Flügelüberschlags.

Der so aufgespannte Flügelrahmen 12 kann dann in der gewünschten Weise durch entsprechende Drehung (Pfeil T in Fig. 13) des Auflagetisches 90 positioniert werden, wobei der Tisch 90 zusätzlich parallel zur Transportrichtung U um eine gewisse Strecke hin und her bewegbar ausgebildet ist (Doppelpfeil V in Fig. 13), damit die gewünschte Orientierung der jeweiligen Ecke (Winkelhalbierende 12aa radialorientiert in bezug auf die Achse H in Fig. 10) eingestellt werden kann.

Nach erfolgtem Ecklager-Anschlag werden die Spannarme 88a bis 88d wieder zurückgeschwenkt zur entsprechenden Freigabe und Weitertransport des beschlagenen Flügelrahmens.

Die Zuführung der Eckwinkel 18 erfolgt bei den vorstehend beschriebenen Ausführungsbeispielen jeweils in einem Magazin 52 bzw. 52', in der die Eckwinkel ineinander geschachtelt angeordnet sind, d.h. mit zusammenfallender Winkelhalbierenden 18a. Es ist auch eine andere Art der Zuführung denkbar, nämlich innerhalb eines Magazins, in der die Eckwinkel übereinanderliegen, also miteinander fluchten.

Die Schraubaggregate 58, 58' können zusätzlich auch eine Anfangs-Fixierfunktion übernehmen, indem sie mit ihren Schrauben bereits bei der Ecklageraufnahme aus dem Magazin geringfügig in die entsprechenden Schraublöcher des Ecklagers eingreifen. Auch kann bei beiden Ausführungsbeispielen die Halterung 56 bzw. 56' auch am Montagekopf 22 bzw. 22' ortsfest angeordnet sein, wobei dann die Verschiebebewegung zwischen den jeweiligen Positionen durch entsprechende gleichzeitige Verschiebung der Brücke 48 und des Montagekopf 24 erzielt wird bzw. durch entsprechende Betätigung der Kolbenstangen-Zylindereinheit 80.

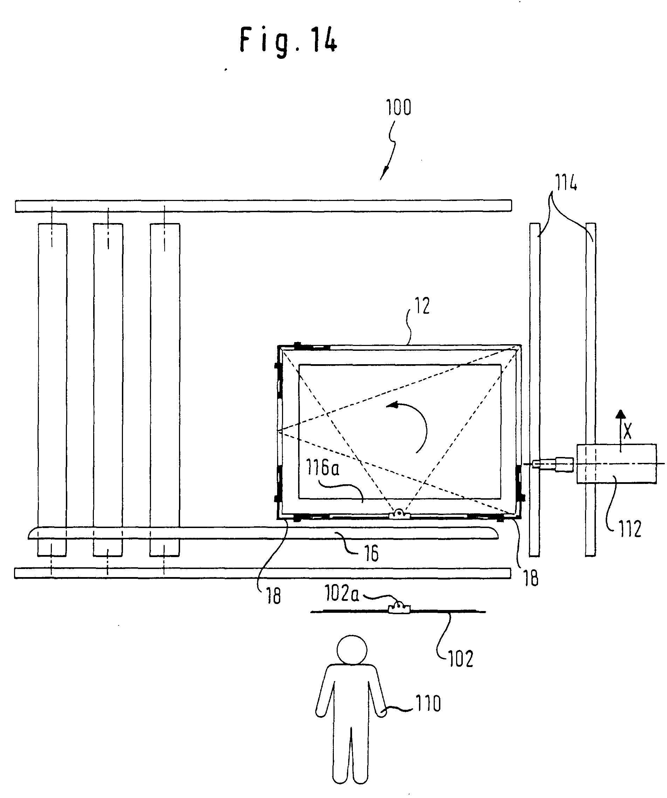

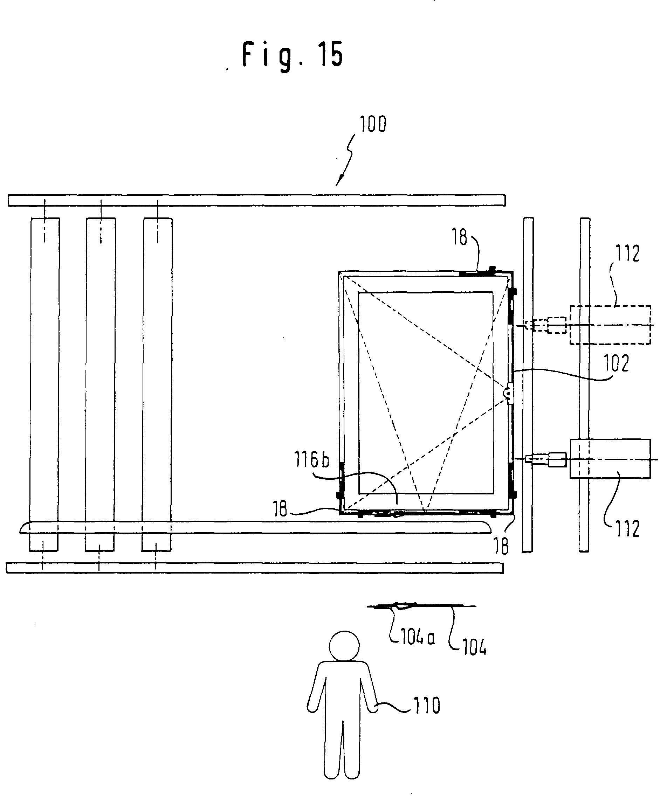

Nach dem Anschlagen der Eckumlenkungen 18 erfolgt in der Verbindungselement-Anschlagssektion 100 gemäß den Fig. 14 bis 17 der Anschlag der übrigen Beschlagsteile, nämlich der Verbindungselemente (Langteile). Diese umfassen jeweils einen Treibstangenabschnitt und einem Stulpschienenabschnitt, die zumindest an einem Ende mit einem der bereits montierten Ecklager zu verbinden sind (Stulpschienenabschnitt mit dem Eckwinkel 28 und Treibstangenabschnitt mit dem Kopplungsteil 30a). Das auch als Getriebeschiene bezeichnete Verbindungselement 102 auf der Verschlußseite ist an beiden Enden mit jeweiligen Eckumlenkungen 18 zu verbinden und weist zudem ein Getriebe 102a auf (Fig. 14), in welches ein nicht dargestellter Bedienungshandgriff einsteckbar ist. Ein auch als Oberschiene bezeichnetes Verbindungselement 104 am oberen Flügelrahmenholm verbindet wiederum zwei Ecklager 18 und weist zudem eine an sich bekannte, nicht weiter dargestellte Ausstellschere 104a auf (siehe Fig. 15). Mit dem Ausstellarm der Ausstellschere 104a wirkt der Pilzkopf der oberen drehlagerseitigen Eckumlenkung 18 zusammen.

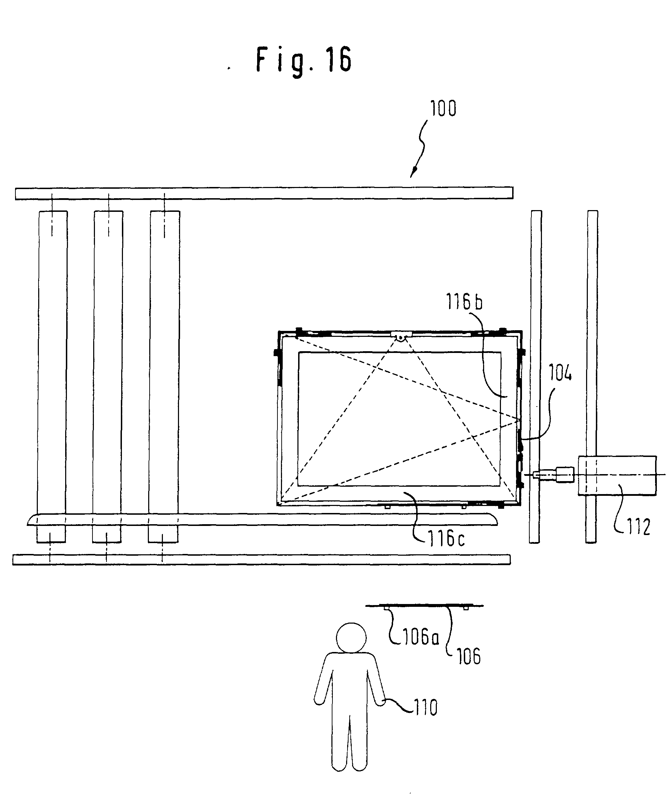

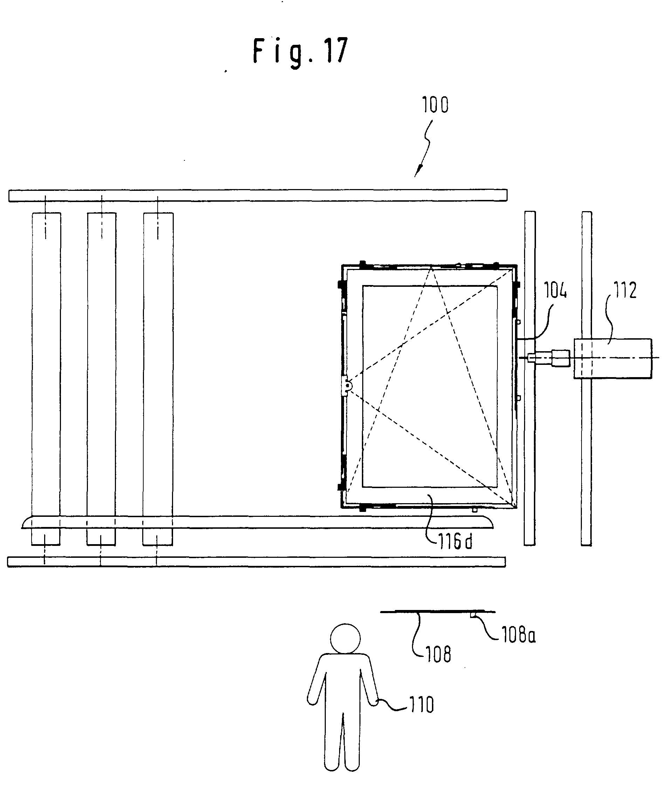

Zumindest bei größeren Flügelformaten können noch weitere auch als Zusatzverriegelungsschiene bezeichnete Verbindungselemente 106 (Fig. 16) und 108 (Fig. 17) vorgesehen sein, die nur an einem ihrer beiden Enden mit einem Ecklager 18 verkoppelt sind. Das Verbindungselement 106 läuft vom oberen drehlagerseitigen Ecklager 18 ausgehend nach unten längs des entsprechenden Flügelrahmen-Vertikalholms; das Verbindungselement 108 läuft dementsprechend vom unteren unteren drehlagerfernen Ecklager 18 ausgehend längs des unteren horizontalen Rahmenholms. Beide Verbindungselemente 106, 108 tragen an ihrem freien Ende jeweils ein Riegelelement 106a bzw. 108a, um bei großen Flügelrahmenformaten für sichere Schließverriegelung und Einbruchsschutz zu sorgen. Die beiden anderen Verbindungselemente 102 und 104 dagegen tragen kein Riegelelement, da die entsprechenden Riegelelemente der Ecklager 18 zur Funktions- und Einbruchssicherheit zumindest völlig ausreichend sind.

Das Anlegen der jeweiligen Verbindungselemente 102 bis 108 erfolgt schrittweise durch eine in den Zeichnungen symbolisierte Person 110. Diese bereitet auf die jeweils erforderlichen Verbindungselemente vor unter Berücksichtigung evtl. Flügelformatänderungen und Beschlagssystemsänderungen während einer Schicht. Derartige Änderungen sind erfindungsgemäß ohne weiteres auch kurzfristig möglich. Die Person 110 sucht also die passenden Verbindungselemente heraus, gegebenenfalls führt sie auch die erforderliche Längenanpassung der Verbindungselemente durch.

Die Befestigung durch Festschrauben erfolgt jedoch automatisch mit Hilfe zumindest eines in den Figuren dargestellten Schraubaggregats 112. Dieses ist mit automatischer Schraubenzuführung versehen. Da die Taktzeit ausreichend ist für eine serielle Verschraubung, ist zur Reduzierung des Geräteaufwands ein einziges Schraubaggregat 112 vorgesehen, welches parallel zur Kante des ihm gegenüberliegenden Flügels 12 (Pfeil X) verschiebbar ausgebildet ist. Entsprechende Führungsschienen 114 sind in Fig. 14 angedeutet. Durch nicht dargestellte Flügelformatsensoren (z.B. Serie von Lichtschranken) kann die jeweilige Holmlänge selbsttätig festgestellt werden und dementsprechend das Schraubaggregat 112 angesteuert werden.

In einem in Fig. 14 angedeuteten ersten Schritt legt die Person 110 das Verbindungselement 102 an den Flügel 12 (d.h. an den drehlagerfernen Vertikalholm 116a). Aufgrund der Einpassung in die abgestufte Flügelfalzumfangsnut besteht nicht die Gefahr, daß das angelegte, jedoch nicht schraubbefestigte Verbindungselement 102 herausfällt.

Anschließend wird der Flügel 12 um 90° entgegen dem Uhrzeigersinn der Fig. 14 gedreht in die Position gemäß Fig. 15. Nun erfolgt die Schraubbefestigung des Verbindungselements 102 durch das Schraubaggregat 112, wozu dieses nacheinander die vorgesehenen Einschraubpositionen anfährt und dort die Schrauben in das Verbindungselement und den Nutgrund einschraubt. Gleichzeitig legt die Person 110 das vorbereitete Verbindungsteil 104 an den oberen Horizontalholm 116b an, einschließlich der Ausstellschere 104a.

Nachfolgend wird der Flügel wiederum gegen dem Uhrzeigersinn um 90° in die Position gemäß Fig. 16 gedreht. Nunmehr befestigt das Schraubaggregat 112 das Verbindungselement 104 am oberen Horizontalholm 116b des Flügelrahmens 12. Bei einigen Flügeltypen, insbesondere kleinformatigen Flügeln, ist damit die Anschlagsarbeit beendet. Ansonsten wird im Schritt gemäß Fig. 16 von der Person 110 noch zusätzlich das Verbindungselement 106 an den drehlagerseitigen Vertikalholm 116c angelegt:

Nach weiterer Drehung entgegen dem Uhrzeigersinn um 90° in die Flügelposition gemäß Fig. 17 erfolgt die Schraubbefestigung des Verbindungselements 104 durch das Schraubaggregat 112 und gegebenenfalls das Anlegen des Verbindungselements 108 durch die Person 110 an den unteren Horizontalholm 116d. Im letzteren Falle wird dann in einem letzten Schritt nach weiterer 90°-Drehung des Flügels das Verbindungselement 108 vom Schraubaggregat 112 festgeschraubt.

Zur Durchführung der 90°-Drehbewegung des Flügels 12 kann wiederum eine entsprechend bewegliche Montagehalterung eingesetzt werden, beispielsweise die Montagehalterung 36' gemäß Fig. 12 und 13. Um eine Kollision der Flügelecken während der Rotation mit der Führungsleiste 16 bzw. dem Schraubaggregat 112 samt Schienen 114 zu vermeiden, kann die Montagehalterung 36' dementsprechend seitlich bzw. diagonal verschiebbar ausgebildet sein (Richtungspfeil V in Fig. 13). Nach der 90°-Drehung erfolgt dann eine Rückbewegung in Diagonalrichtung.

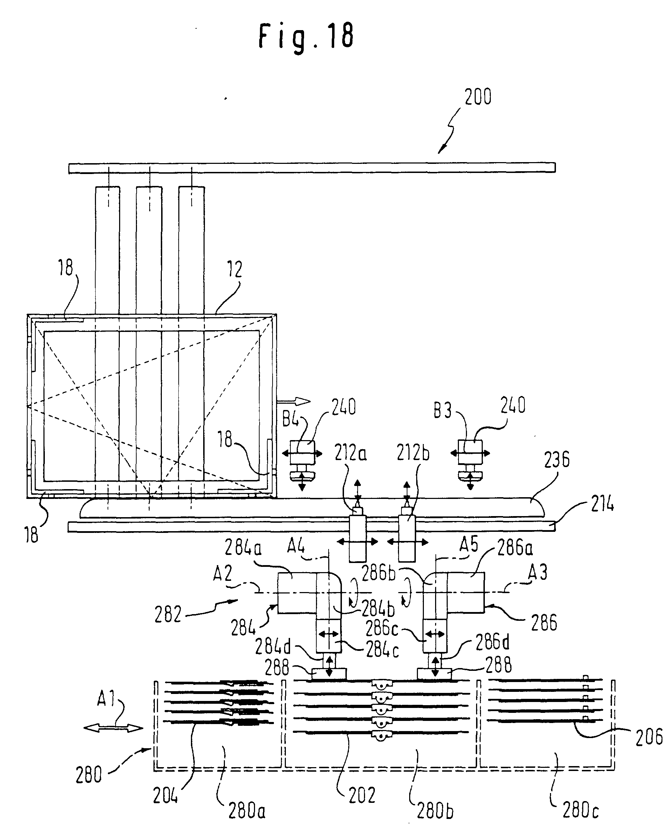

Eine alternative Ausgestaltung der Verbindungselement-Anschlagssektion ist in den Fig. 18 bis 21 wiederum vereinfacht dargestellt und allgemein mit 200 bezeichnet. Ihre Bauelemente sind, soweit im wesentlichen funktionsgleich, mit den selben Bezugszeichen, jeweils vermehrt um die Zahl 100, versehen.

Das Anschlagen und Befestigen der Verbindungselemente (Langteile) erfolgt nunmehr vollautomatisch jeweils in einem Schritt und am selben Holm des Flügelrahmens 12. Der Flügelrahmen 12 wird jedoch weiterhin nach jedem Schritt um 90° gedreht. Die Zuführung der Verbindungselemente 202 (Getriebeschiene), 204 (Oberschiene) und 206 (Zusatzverriegelung) erfolgt über eine Magazineinheit 280, die hierzu mit mehreren Abteilen 280a, 280b und 280c zur Aufnahme des entsprechenden Typs der Verbindungselemente ausgebildet ist. Gegenüber einem Montageautomaten 282 in Form zweier zweiachsiger Roboterarme 284 und 286 ist die Magazineinheit 280 seitlich wahlweise hin und her verfahrbar (Richtungspfeil A1), um hierdurch das jeweils benötigte Verbindungselement in die Reichweite des jeweiligen Roboterarms 284 bzw. 286 zu bringen. Es sind auch andere Formen des Magazinelements 280 und andere Bewegungsarten denkbar, wie z.B. ein rotierendes Magazin mit sektorförmigen Abteilen.

Die beiden Roboterarme 284, 286 bestehen jeweils aus einem ortsfesten Basisteil 284a bzw. 286a, einem am Basisteil um eine horizontale Achse A2 bzw. A3 wahlweise schwenkbaren, zur Achse A2 bzw. A3 senkrecht verlaufenden Oberarm 284b bzw. 286b, einem am jeweiligen Oberarm um dessen Längsachse A4 bzw. A5 wahlweise drehbaren Unterarm 284c bzw. 286c sowie einer am jeweiligen Unterarm in Armlängsrichtung (A4 bzw. A5) wahlweise ausschiebbaren bzw. einziehbaren Halterung 284d bzw. 286d. Die möglichen Bewegungsrichtungen sind in Fig. 18 durch kleine Richtungspfeile angedeutet. Die Halterung 284d bzw. 286d weist einen Magnetkopf 288 auf, um hierdurch das jeweilige Verbindungselement 202, 204, 208 ergreifen zu können. Anstelle des Magneten (Permanentmagnet oder Elektromagnet) kann auch eine andere Art der momentanen Fixierung, wie z.B. durch Unterdruck oder mechanische Greifmechanik eingesetzt werden.

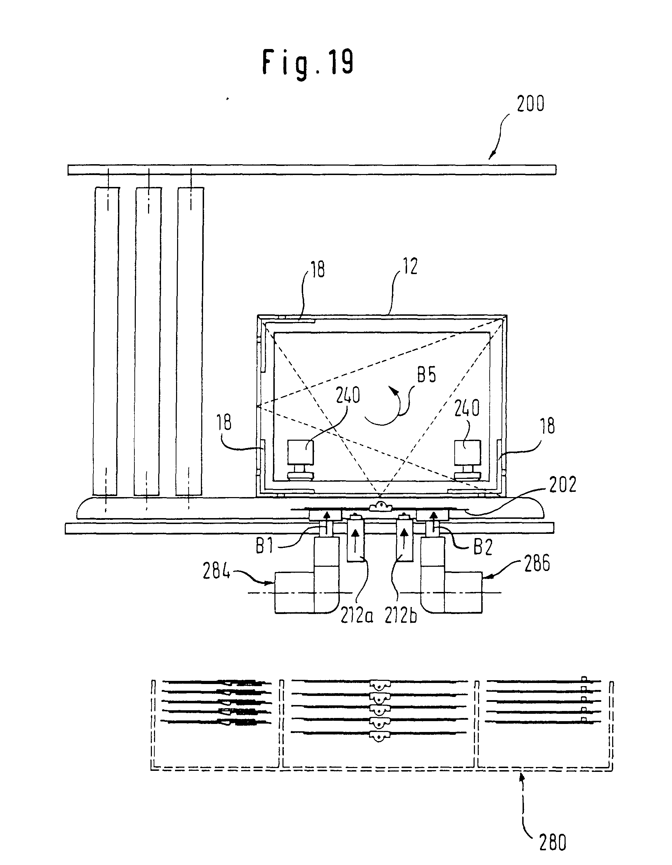

Unter Umständen kommt man mit einem einzigen Roboterarm aus. Zumindest bei dem Anschlagen an großformatige Flügelrahmen 12 ist es jedoch weitaus günstiger, zwei Roboterarme, wie dargestellt, einzusetzen, die dann gemäß den Fig. 8 und 9 gemeinsam das dementsprechend lange Verbindungselement 202 (= Getriebeschiene) ergreifen und gemeinsam um die beiden zusammenfallenden Achsen A2 und A3 um ca. 180° verschwenken und schließlich durch Herausfahren der beiden Halter 284d und 286d in die zugehörige Flügelfalznut einschieben (Pfeile B1 und B2 in Fig. 19).

Die bei diesem Schritt erforderliche momentane Fixierung des Flügelrahmens 12 erfolgt in ähnlicher Weise wie bei den vorher beschriebenen Ausführungsformen. In den Fig. 18 bis 21 sind hierzu jeweils zwei Spannvorrichtungen 240 vorgesehen mit Aufbau ählich der Fig. 2. Das Gegenlager wird jedoch hier durch eine Führungsleiste 236 gebildet. Ferner können die beiden Spannvorrichtungen 240 zur Anpassung an unterschiedliche Rahmenlängen zusätzlich auch seitlich verschiebbar ausgebildet sein, wie durch die Richtungs-Doppelpfleile B3 und B4 angedeutet ist.

Das Rotieren des Flügels 12 zwischen den Bearbeitungsschritten um jeweils 90° (z.B. entgegen dem Uhrzeigersinn - Bewegungspfeil B5 in Fig. 19) kann beispielsweise durch die Montagehalterung 36' gemäß den Fig. 12 und 13 durchgeführt werden.

Zur Schraub-Befestigung der angelegten Verbindungselemente 202 bis 206 ist wiederum wenigstens ein Schraubaggregat entsprechend dem Schaubaggregat 112 in den Fig. 14 bis 17 mit seitlicher Verschiebbarkeit längs einer Führungsschiene 214 (hier parallel zur Führungsleiste 236) vorgesehen. Im dargestellten Ausführungsbeispiel sind zwei Schraubaggregate 212a und 212b vorgesehen, um die kurze Taktzeit von z.B. 2 Minuten einhalten zu können, obwohl gleichzeitig auch die Roboterarme 284 und 286 am selben Flügelrahmenholm tätig sind.

Der Montageablauf ergibt sich aus den Figuren 18-21. Die Entnahme und das Anlegen des Verbindungselements 202 (Getriebeschiene) erfolgt durch beide Roboterarme 284, 286, wie vorstehend bereits erläutert. Nach dem Einsetzen des Verbindungselements 202 in die Flügelfalznut treten die beiden Schraubaggregate 212a, 212b in Aktion.

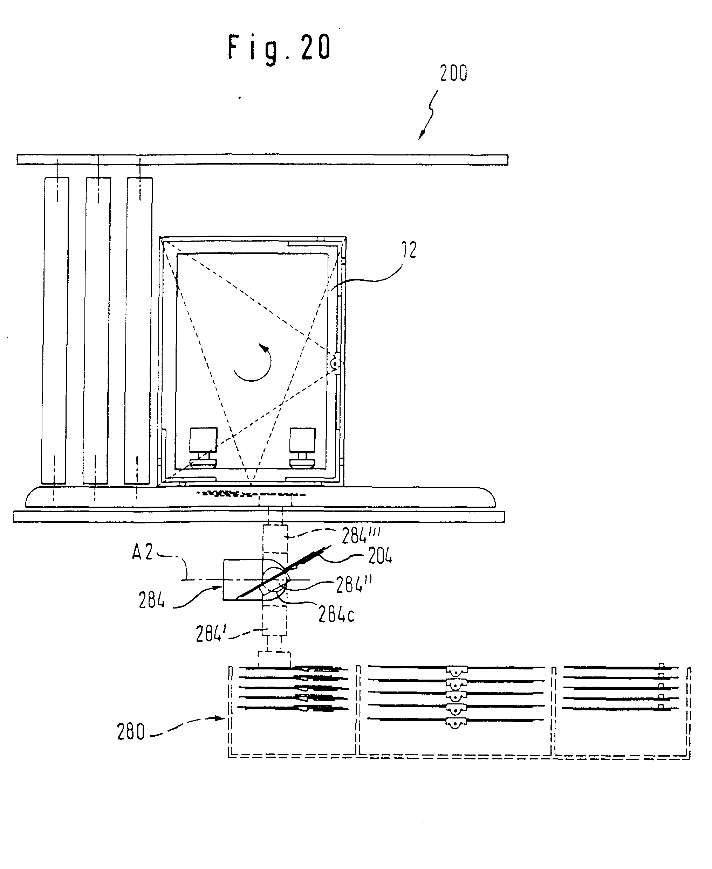

Anschließend wird der Flügelrahmen 12 nach Lösen der beiden Spannvorrichtungen 240 um 90° gedreht und in dieser Position wiederum festgespannt (Fig. 20). Mittlerweile hat einer der beiden Roboterarme, beipielsweise der in den Figuren linke Roboterarm 284, aus dem dementsprechend seitlich verschobenen Magazinelement 280 das Verbindungselement 204 (Oberschiene mit Ausstellschereneinheit) entnommen (strichliert angedeutete Position 284') und dann um 90° um die Achse A2 verschwenkt (mit durchgezogener Linie angedeutete Position 284''). Anschließend dreht der Unterarm 284c die Halterung 284d samt Verbindungselement 204 um 180° um die Drehachse A4, um die beiden Enden des Elements 204 zu vertauschen (die Ausstellschereneinheit muß bei dieser Flügelrahmenorientierung links liegen).

Schließlich verschwenkt der Roboterarm 284 um weitere 90° um die Achse A2, so daß das Verbindungselement 204 unmittelbar vor der Flügelfalznut liegt (strichlierte Position 284"' in Fig. 20). Sodann wird die Halterung 284d so weit ausgefahren, bis das Verbindungselement 204 die Nut ausfüllt. Nun treten die beiden in Fig. 20 der Einfachheit halber nicht dargestellten Schraubaggregate 212a, 212b in Aktion.

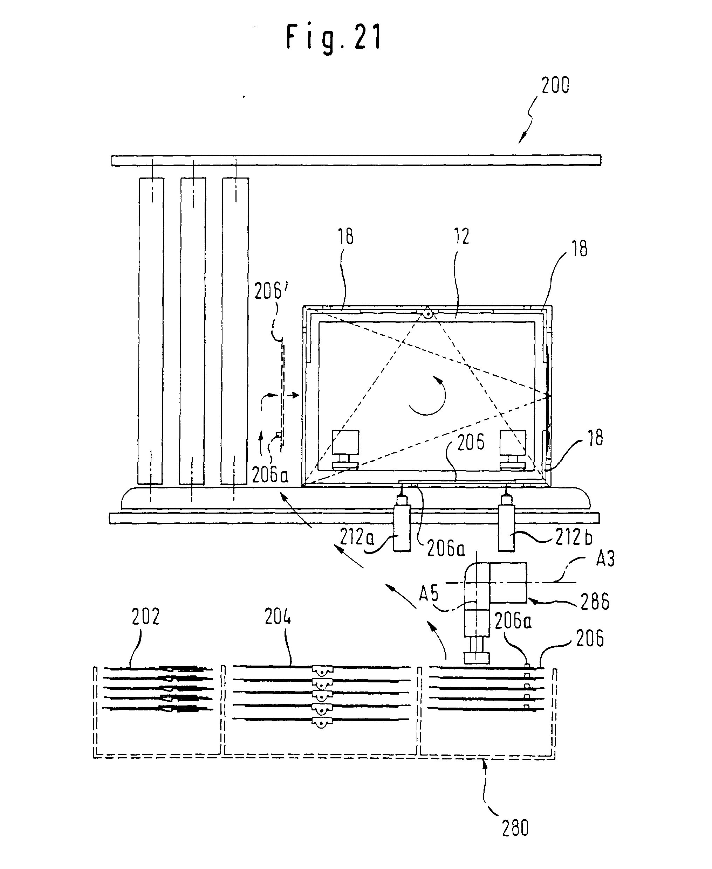

Im nächsten Schritt wird der Flügelrahmen 12 wieder um 90° gedreht und in der Fig. 21 angegebenen Weise momentan fixiert zum Anschlagen des Verbindungselements 206 (Zusatzverriegelung am drehlagerseitigen Flügelrahmenholm). Dies kann beispielsweise durch den in den Figuren rechten Roboterarm 286 erfolgen, der somit bereits in Aktion treten kann, ehe der andere Roboterarm seine Anschlagsarbeit gemäß Fig. 20 beendet hat. Der Roboterarm 286 ergreift also das Verbindungselement 206, und führt dann die gleiche Drehbewegung um 180° um seine Achse A5 durchführt, wie diese gemäß Fig. 20 beim Verbindungselement 204 erfolgte, um das Riegelelement 206 am eckumlenkungsfernen (linken) Ende des Verbindungselements 206 zu haben (im Gegensatz zu dem Verbindungselement 206 in der Magazineinheit). Dann wird das Verbindungselement 206 vom Roboterarm 286 in die Falzumfangsnut des Flügels 12 eingeschoben und anschließend mit Hilfe der beiden Schraubaggregate 212a und 212b festgeschraubt. Letzteren Schraubvorgang zeigt die Fig. 21.

In Fig. 21 ist ferner das Anschlagen eines weiteren mit unterbrochener Umrißlinie angedeuteten Verbindungselements 206' am unteren horizontalen Flügelrahmenholm angedeutet. Das Anschlagen nach Drehen des Flügels entgegen dem Uhrzeigersinn um 90°, in entsprechender Weise, so daß auf eine zeichnerische Darstellung verzichtet werden kann. Man erkennt, daß es hierbei keiner Drehung um die Achse A5 bedarf, da die Armorientierung im Magazin 280 bereits passend ist.

Der so mit beispielsweise drei Ecklagern 18 sowie den Verbindungselmenten 202, 204 und 206 versehene Flügel 12 ist somit komplett mit den erforderlichen Beschlagsteilen versehen. Er muß lediglich mit dem gleichfalls mit Beschlagsteilen versehenen Festrahmen verbunden werden, was in einer weiteren, nicht dargestellten Montagestufe erfolgt, oder ggf. erst am vorgesehenen Einsatzort.

Auf Grund der Verwendung zweier Roboterarme und zweier Schraubaggregate läßt sich die kurze Taktzeit von beispielsweise 2 Minuten ohne weiteres einhalten. Auf Grund der Bewegbarkeit der Magazineinheit 280 vereinfacht sich der Aufbau für die Roboterarme.

Die vorstehend beschriebenen Montagesektionen zeichnen sich durch schnelle und einfache Anpaßbarkeit an unterschiedliche Rahmengrößen und Beschlagssysteme aus bei geringer Taktzeit von beispielsweise zwei Minuten entsprechend der Taktzeit vorangehender Flügelherstellungsphasen, wobei der Automatisierungsaufwand vergleichsweise gering ist.

## Patentansprüche

1. Verfahren zur montageautomaten-unterstützten Montage von Beschlagsteilen eines wenigstens zwei Eckumlenkungen (18) sowie mit den Eckumlenkungen (18) verbundene, an die jeweiligen Flügelabmessungen angepaßte Verbindungselemente (102, 104, 106, 108) aufweisenden Beschlags an den Flügel (12) eines Fensters, einer Tür oder dergleichen, dadurch gekennzeichnet, daß in einer ersten Montagephase mittels Montageautomaten (24) sämtliche Eckumlenkungen (18) am Flügel (12) befestigt werden, wobei baugleiche Eckumlenkungen (18) eingesetzt werden, und daß in einer nachfolgenden zweiten Montagephase sämtliche Verbindungselemente (102, 104, 106, 108; 202, 204, 206) am Flügel (12) befestigt werden.

2. Verfahren nach Anspruch 1, dadurch gekennzeichnet, daß Eckumlenkungen eingesetzt werden, die zu einer zur Längsmittelebene der Eckumlenkungen senkrechten Winkelhalbierungsebene (Winkelhalbierende 18a) spiegelsymmetrisch ausgebildet sind.

3. Verfahren nach Anspruch 1, dadurch gekennzeichnet, daß Eckumlenkungen (18) eingesetzt werden, die zur Winkelhalbierungsebene (Winkelhalbierende 18a) asymmetrisch ausgebildet sind und daß die Eckumlenkungen (18) am Flügel derart angeschlagen werden, daß, bezogen auf eine Umlaufrichtung längs der Flügelfalzumfangsfläche (26), stets der gleiche Eckumlenkungsschenkel in Umlaufrichtung weist.

4. Verfahren nach einem der vorhergehenden Ansprüche, dadurch gekennzeichnet, daß Eckumlenkungen (18) eingesetzt werden mit wenigstens einem Verriegelungselement, vorzugsweise mit je einem Verriegelungselement an beiden Eckumlenkungsschenkeln.

5. Verfahren nach Anspruch 4, dadurch gekennzeichnet, daß eines der beiden Verriegelungselemente (32) pilzkopfförmig und vorzugsweise das andere Verriegelungselement (34) quer zur Längsmittelebene wahlweise verstellbar ausgebildet ist.

6. Verfahren nach einem der vorhergehenden Ansprüche, dadurch gekennzeichnet, daß die Eckumlenkungen (18) dem Montageautomaten (24) in einem Magazin (52) zugeführt werden.

7. Verfahren nach einem der vorhergehenden Ansprüche, dadurch gekennzeichnet, daß der Montageautomat (24) wenigstens ein Schraubaggregat (58) mit automatischer Schraubenzuführung aufweist.

8. Verfahren nach einem der vorhergehenden Ansprüche, dadurch gekennzeichnet, daß der Montageautomat (24) aufgrund entsprechender Relativbewegung zum Flügel nacheinander an den erforderlichen Ecken des Flügels positioniert wird zur nachfolgenden Befestigung der jeweiligen Eckumlenkung am Flügel (Fig. 3, 5, 7, 8, 9, 10, 11).

9. Verfahren nach einem der vorhergehenden Ansprüche, dadurch gekennzeichnet, daß in der ersten Montagephase der Flügel auf einer ortsfesten Montagehalterung (36) festgespannt wird und der Montageautomat (24) von Flügelecke zu Flügelecke bewegt wird.

10. Verfahren nach Anspruch 9, dadurch gekennzeichnet, daß der Montageautomat (24) einen Montagekopf (22) aufweist, der an einer den Flügel (12) überspannenden, seitlich verfahrbaren Brücke (48) um eine zur Flügelebene im wesentliche senkrechte Achse (D) drehbar sowie in Brückenlängsrichtung (E) verschiebbar angeordnet ist.

11. Verfahren nach einem der Ansprüche 1 bis 10, dadurch gekennzeichnet, daß in der ersten Montagephase der Flügel (12) auf einer um eine zur Flügelebene im wesentlichen senkrechte Achse (S) drehbaren und vorzugsweise in hierzu senkrechter Richtung (Doppelpfeil V) hin und her bewegbaren Montagehalterung (36') festgespannt ist, und die Montagehalterung (36') nacheinander die verschiedenen Flügelecken zum Montageautomaten (24") hin bewegt.

12. Verfahren nach Anspruch 11, dadurch gekennzeichnet, daß der Montageautomat (24) einen um eine Achse (H) zwischen einer Magazin-Drehstellung und einer Montage-Drehstellung drehbaren und vorzugsweise in hierzu radialer Richtung (G) hin und her bewegbaren Montagekopf (22') aufweist.

13. Verfahren nach einem der vorhergehenden Ansprüche, dadurch gekennzeichnet, daß ein bzw. der Montagekopf (22, 22') des Montageautomaten (24, 24') eine zumindest zwischen einer Montagevorbereitungsstellung (Fig. 4) und einer Montagestellung bewegbare Halterung (56, 56') für die Eckwinkel (18) aufweist, wobei der Eckwinkel (18) in der Montagevorbereitungsstellung im Bereich des jeweiligen Flügelecks, jedoch außerhalb einer Eckwinkel-Aufnahmenut (61), dagegen in der Montagestellung innerhalb der Eckwinkel-Aufnahmenut (61) angeordnet ist.

14. Verfahren nach Anspruch 13, dadurch gekennzeichnet, daß die Halterung (56) im wesentlichen in Richtung der Winkelhalbierenden (18a) des Ecklagers (18) zwischen der Montagevorbereitungsstellung und der Montagestellung bewegbar ist.

15. Verfahren nach einem der vorhergehenden Ansprüche, dadurch gekennzeichnet, daß ein bzw. der Montagekopf (22) des Montageautomaten (24) eine Magnethalterung (M) für die Eckwinkel aufweist.

16. Verfahren zur wenigstens teilautomatischen Montage von Beschlagsteilen am Flügel (12) eines Dreh-Kipp-Fensters oder dergleichen, wobei der Beschlag drei gleiche Eckumlenkungen (18) mit Verriegelungselementen und in der Länge an die jeweiligen Flügelabmessungen anpaßbare Verbindungselemente (102, 104, 106, 108) umfaßt,
dadurch gekennzeichnet, daß
der Flügel (12) auf einer Montagehalterung (36) festgespannt wird und
von einem Montageautomaten (24) zunächst eine Eckumlenkung (18) aus einem am Montageautomaten (24) vorgesehenen Magazin (52) entnommen wird,
daß der Montageautomat (24) nachfolgend eine erste Ecke (20a) des Flügels (12) anfährt und dort die Eckumlenkung (18) positioniert,
daß diese danach an beiden Eckumlenkungschenkeln von im Montageautomaten (24) integrierten Schraubaggregaten (58) mit automatischer Schraubenzuführung an den Flügel (12) festgeschraubt wird,
daß der Montageautomat (24) dann eine zweite Eckumlenkung (18) dem Magazin (52) entnimmt und eine benachbarte Ecke (20b) des Flügels (12) anfährt und dort die zweite Eckumlenkung (18) positioniert, die wiederum von den Schraubaggregaten (58) festgeschraubt wird, daß der Montageautomat (24) dann eine dritte Eckumlenkung (18) entnimmt und in gleicher Drehrichtung um den Flügel (12) gesehen eine nächste Ecke (20c) des Flügels (12) anfährt und dort die dritte Eckumlenkung (12) positioniert, die wiederum von den Schraubaggregaten (58) festgeschraubt wird und
daß der Montageautomat (24) dann in seine Ausgangsposition (22a) zurückfährt und der Flügel (12) auf der Montagehalterung (36) freigegeben wird und zu einem Montageplatz für die Montage der Verbindungselmente (102, 104, 106, 108) weitertransportiert wird.

17. Verfahren nach Anspruch 16, dadurch gekennzeichnet, daß die Montagehalterung (36) bewegbar ausgebildet ist und daß anstelle der Bewegung des Montageautomaten (24) von Flügelecke zu Flügelecke die Montagehalterung (36) den Flügel (12) dementsprechend schrittweise bewegt, damit die jeweilige Flügelecke dem Montageautomaten (24') zur Befestigung der Eckumlenkung (18) gegenüberliegt.

18. Verfahren nach einem der vorhergehenden Ansprüche, dadurch gekennzeichnet, daß in der zweiten Montagephase die Verbindungselemente (102, 104, 106, 108; 202, 204, 206) manuell oder mittels Montageautomaten (282) an den Flügel (12) angelegt werden, ggf. nach vorheriger Ablängung, und dann mittels Befestigungsautomaten, insbesondere Schraubaggregat (112; 212), am Flügel (12) befestigt werden.

19. Verfahren nach einem der vorhergehenden Ansprüche, dadurch gekennzeichnet, daß in der zweiten Montagephase in einem ersten Schritt ein erstes Verbindungselement (102) an den Flügel (12) angelegt wird,
daß in einem zweiten Schritt ein zweites Verbindungselement (104) an den Flügel (12) angelegt und das erste Verbindungselement (102) von einem bzw. dem Schraubaggregat (112) selbsttätig am Flügel befestigt wird,
daß ggf. in einem dritten Schritt ein drittes Verbindungselement (106) angelegt und das zweite Verbindungselement (104) befestigt wird,
daß ggf. in einem vierten Schritt ein viertes Verbindungselement (108) angelegt und das dritte Verbindungselement (106) befestigt wird und daß im jeweils letzten Schritt das vorletzte Verbindungselement (108) befestigt wird.

20. Verfahren nach Anspruch 29, dadurch gekennzeichnet, daß das Anlegen der Verbindungselemente (102, 104, 106, 108) manuell erfolgt.

21. Verfahren nach Anspruch 20, dadurch gekennzeichnet, daß das Anlegen und das Befestigen der Verbindungselemente (202, 204, 206) jeweils im gleichen Schritt erfolgt.

22. Verfahren nach Anspruch 21, dadurch gekennzeichnet, daß das Anlegen mittels Montageautomaten (282) erfolgt.

23. Verfahren nach einem der Ansprüche 18 bis 22, dadurch gekennzeichnet, daß der Flügel (12) zwischen den Schritten jeweils um 90° gedreht wird.

24. Verfahren nach einem der Ansprüche 18 bis 23, dadurch gekennzeichnet, daß das Schraubaggregat (112; 212) parallel zur Kante des ihm jeweils gegenüberliegenden Flügels (Richtung X) verschiebbar ausgebildet ist.

25. Verfahren nach einem der Ansprüche 18 bis 24, dadurch gekennzeichnet, daß der Montageautomat (282) eine Zuführeinheit aufweist zur wahlweisen Entnahme des jeweiligen Verbindungselements aus einer Magazineinheit (280).

26. Verfahren nach Anspruch 25, dadurch gekennzeichnet, daß die mehrere verschiedenen Abteile (280a, 280b, 280c) für die unterschiedlichen Verbindungselemente (202, 204, 206) aufweisende Magazineinheit (280) gegenüber einem Entnahmekopf der Zuführeinheit abteilweise verfahrbar ist.

27. Verfahren nach Anspruch 25 oder 26, dadurch gekennzeichnet, daß die Zuführeinheit zur wahlweisen Drehung eines der Magazineinheit (280) entnommenen Verbindungsteils (202, 204, 206) im Sinne einer Vertauschung der beiden Enden des Verbindungsteils (202, 204, 206) ausgebildet ist.

28. Verfahren nach Anspruch 27, dadurch gekennzeichnet, daß der Montageautomat (282) einen, vorzugsweise zwei Roboterarme (284, 286) mit zwei verschiedenen Drehachsen (A2,A4; A3,A5) und vorzugsweise veränderbarer Armlänge aufweist.

29. Verfahren nach Anspruch 28, dadurch gekennzeichnet, daß das freie Ende des Roboterarms (284, 286) als Halterung (284d, 286d), vorzugsweise Magnethalterung, für die Verbindungselemente ausgebildet ist zur Entnahme aus der Magazineinheit (280) und zum Anlegen am Flügel (12).

30. Beschlagssystem, insbesondere Dreh-Kipp-Beschlagssystem oder Dreh-Beschlagssystem für Fenster, Türen oder dergleichen, umfassend baugleiche Eckumlenkungen (18) an wenigstens zwei Flügelecken und mit den Eckumlenkungen (18) verbundene Verbindungselemente (102, 104, 106, 108; 202, 204, 208) zur Durchführung des Verfahrens nach einem der vorhergehenden Ansprüche.

## Claims

1. A method for automatic assembly machine-assisted mounting of fitting components of a fitting comprising at least two corner deflection means (18) together with connecting elements (102, 104, 106, 108) connected with the corner deflection means (18) and conformed to the respective wing or leaf dimensions on the wing or leaf (12) of a window, door or the like, characterised in that all the corner deflection means (18) are attached to the wing or leaf (12) by means of automatic assembly machines (24) in a first assembly stage, corner deflection means (18) of identical construction being used, and in that all the connecting elements (102, 104, 106, 108 ; 202, 204, 206) are attached to the wing or leaf (12) in a second, subsequent assembly stage.

2. A method according to claim 1, characterised in that corner deflection means are used which are of mirror-symmetrical construction with regard to an angle bisecting plane (angle bisector 18a) perpendicular to the longitudinal central plane of the corner deflection means.

3. A method according to claim 1, characterised in that corner deflection means (18) are used which are of asymmetrical construction with regard to the angle bisecting plane (angle bisector 18a) and in that the corner deflection means (18) are fixed on the wing or leaf in such a way that, with respect to a direction of circulation along the circumferential wing or leaf rebate surface (26), the same corner deflection means leg is always directed in the direction of circulation.

4. A method according to one of the preceding claims, characterised in that corner deflection means (18) are used with at least one locking element, preferably with one locking element on each of the two corner deflection means legs.

5. A method according to claim 4, characterised in that one of the two locking elements (32) is in the form of a mushroom and the other locking element (34) is preferably adjustable as desired perpendicularly to the longitudinal central plane.

6. A method according to one of the preceding claims, characterised in that the corner deflection means (18) are fed to the automatic assembly machine (24) in a magazine (52).

7. A method according to one of the preceding claims, characterised in that the automatic assembly machine (24) comprises at least one screw unit (58) with automatic screw feed.

8. A method according to one of the preceding claims, characterised in that the automatic assembly machine (24) is positioned at the required corners of the wing or leaf in succession as a result of appropriate relative movement with respect to the wing or leaf for subsequent attachment of the respective corner deflection means to the wing or leaf (Figs. 3, 5, 7, 8, 9, 10, 11).

9. A method according to one of the preceding claims, characterised in that, in the first assembly stage, the wing or leaf is fixed on a stationary assembly holder (36) and the automatic assembly machine (24) is moved from wing or leaf corner to wing or leaf corner.

10. A method according to claim 9, characterised in that the automatic assembly machine (24) comprises an assembly head (22), which is arranged on a laterally displaceable bridge (48), spanning the wing or leaf (12), so as to be rotatable about an axis (D) substantially perpendicular to the wing or leaf plane and displaceable in the longitudinal direction (E) of the bridge.

11. A method according to one of claims 1 to 10,. characterised in that, in the first assembly stage, the wing or leaf (12) is fixed on an assembly holder (36') rotatable about an axis (S) substantially perpendicular to the wing or leaf plane and preferably movable to and fro in a direction perpendicular thereto (double arrow V), and the assembly holder (36') moves the various wing or leaf corners towards the automatic assembly machine (24") in succession.

12. A method according to claim 11, characterised in that the automatic assembly machine (24) comprises an assembly head (22') rotatable about an axis (H) between a magazine position and an assembly position and preferably movable to and fro in a direction (G) radial thereto.

13. A method according to one of the preceding claims, characterised in that a or the assembly head (22, 22') of the automatic assembly machine (24, 24') comprises a holder (56, 56') for the corner angle (18) movable at least between an assembly preparation position (Fig. 4) and an assembly position, the corner angle (18) being arranged in the area of the respective wing or leaf corner but outside a corner angle receiving groove (61) in the assembly preparation position and, in contrast, inside the corner angle receiving groove (61) in the assembly position.

14. A method according to claim 13, characterised in that the holder (56) may be moved substantially in the direction of the angle bisector (18a) of the corner bearing (18) between the assembly preparation position and the assembly position.

15. A method according to one of the preceding claims, characterised in that a or the assembly head (22) of the automatic assembly machine (24) comprises a magnetic holder (M) for the corner angle.

16. A method for at least partially automatic mounting of fitting components on the wing or leaf (12) of a tilt and turn window or the like, the fitting comprising three identical corner deflection means (18) with locking elements and connecting elements (102, 104, 106, 108) conformable in length to the respective wing or leaf dimensions,
characterised in that
the wing or leaf (12) is fixed on an assembly holder (36) and
a corner deflection means (18) is firstly removed from a magazine (52) provided on the automatic assembly machine (24) by an automatic assembly machine (24),
in that the automatic assembly machine (24) subsequently approaches a first corner (20a) of the wing or leaf (12) and there positions the corner deflection means (18),
in that this is then screwed firmly to the wing or leaf (12) at both corner deflection means legs by screw units (58) with automatic screw feed incorporated in the automatic assembly machine (24),
in that the automatic assembly machine (24) then removes a second corner deflection means (18) from the magazine (52) and approaches an adjoining corner (20b) of the wing or leaf (12) and positions the second corner deflection means (18) there, which is in turn screwed firm by the screw units (58),
in that the automatic assembly machine (24) then removes a third corner deflection means (18) and approaches the next corner (20c) of the wing or leaf (12), viewed in the same direction of circulation about the wing or leaf (12), and positions the third corner deflection means (12) there, which is in turn screwed firm by the screw units (58) and
in that the automatic assembly machine (24) then returns to its starting position (22a) and the wing or leaf (12) is released from the assembly holder (36) and conveyed on to an assembly station for mounting the connecting elements (102, 104, 106, 108).

17. A method according to claim 16, characterised in that the assembly holder (36) is of movable construction and in that, instead of the automatic assembly machine (24) moving from wing or leaf corner to wing or leaf corner, the assembly holder (36) accordingly moves the wing or leaf (12) in steps, so that the respective wing or leaf corner is opposite the automatic assembly machine (24') for attachment of the corner deflection means (18)

18. A method according to one of the preceding claims, characterised in that, in the second assembly stage, the connecting elements (102, 104, 106, 108; 202, 204, 206) are positioned on the wing or leaf (12) manually or by means of automatic assembly machines (282), optionally after previous cutting to size, and then attached by means of automatic attaching devices, in particular a screw unit (112; 212), to the wing or leaf (12).

19. A method according to one of the preceding claims, characterised in that, in the second assembly stage, in a first step a first connecting element (102) is positioned on the wing or leaf (12),
in that, in a second step, a second connecting element (104) is positioned on the wing or leaf (12) and the first connecting element (102) is attached automatically to the wing or leaf by a or the screw unit (112),
in that, optionally in a third step, a third connecting element (106) is positioned and the second connecting element (104) is attached,
in that, optionally in a fourth step, a fourth connecting element (108) is positioned and the third connecting element (106) is attached and
in that, in the respective last step, the next to last connecting element (108) is attached.

20. A method according to claim 29, characterised in that positioning of the connecting elements (102, 104, 106, 108) is performed manually.

21. A method according to claim 20, characterised in that positioning and attachment of the connecting elements (202, 204, 206) is performed respectively in the same step.

22. A method according to claim 21, characterised in that positioning is performed by means of automatic assembly machines (282).

23. A method according to one of claims 18 to 22, characterised in that the wing or leaf (12) is turned by 90° between each of the steps.

24. A method according to one of claims 18 to 23, characterised in that the screw unit (112; 212) is constructed so as to be displaceable parallel to the edge of the wing or leaf respectively opposite it (direction X).

25. A method according to one of claims 18 to 24, characterised in that the automatic assembly machine (282) comprises a feed unit for selective extraction of the respective connecting element from a magazine unit (280).

26. A method according to claim 25, characterised in that the magazine unit (280) comprising a plurality of different compartments (280a, 280b, 280c) for the various connecting elements (202, 204, 206) may be displaced compartmentally relative to an extraction head of the feed unit.

27. A method according to claim 25 or claim 26, characterised in that the feed unit is constructed, for selective rotation of a connecting element (202, 204, 206) extracted from the magazine unit (280), in such a way as to transpose the two ends of the connecting element (202, 204, 206).

28. A method according to claim 27, characterised in that the automatic assembly machine (282) comprises one, preferably two, robot arms (284, 286) with two different axes of rotation (A2, A4; A3, A5) and preferably of variable length.

29. A method according to claim 28, characterised in that the free end of the robot arm (284, 286) takes the form of a holder (284d, 286d), preferably a magnetic holder, for the connecting elements for the purpose of extraction from the magazine unit (280) and positioning on the wing or leaf (12).

30. A fittings system, in particular a tilt and turn fittings system or a turn fittings system for windows, doors or the like, comprising corner deflection means (18) of identical construction at at least two wing or leaf corners and connecting elements (102, 104, 106, 108; 202, 204, 208) connected with the corner deflection means for performing the method according to one of the preceding claims.

## Revendications

1. Procédé de montage robotisé, sur le battant (12) d'une fenêtre, d'une porte ou similaire, de parties d'une ferrure, présentant au moins deux équerres (18) ainsi que des éléments de liaison (102, 104, 106, 108), reliés aux équerres (18), dont les dimensions sont adaptées à celles du battant correspondant, caractérisé en ce que, dans une première phase de montage au moyen de robots (24), toutes les équerres (18) sont fixées sur le battant (12), des équerres (18) de même construction étant employées dans ce cas, et en ce que, dans une deuxième phase de montage subséquente, tous les éléments de liaison (102, 104, 106, 108 ; 202, 204, 206) sont fixés sur le battant (12),

2. Procédé selon la revendication 1, caractérisé en ce que sont employées des équerres qui sont symétriques par rapport à un plan bissecteur (bissectrice 18a) perpendiculaire au plan médian longitudinal des équerres.

3. Procédé selon la revendication 1, caractérisé en ce que sont employées des équerres (18) qui sont asymétriques par rapport au plan bissecteur (bissectrice 18a) et en ce que les équerres (18) sont fixées sur le battant de telle sorte que, par rapport à une direction de déplacement le long de la périphérie de la feuillure du battant (26), c'est toujours la même branche d'équerre qui est orientée dans la direction de déplacement.

4. Procédé selon l'une des revendications précédentes, caractérisé en ce que sont utilisées des équerres (18) présentant au moins un élément de verrouillage et, de préférence, un élément de verrouillage sur chacune des deux branches de l'équerre.

5. Procédé selon la revendication 4, caractérisé en ce que l'un des deux éléments de verrouillage (32) présente une forme de chapeau de champignon et, de préférence, l'autre élément de verrouillage (34) est déplaçable, au choix, perpendiculairement au plan médian longitudinal.

6. Procédé selon l'une des revendications précédentes, caractérisé en ce que les équerres (18) sont acheminées vers le robot de montage (24) dans un magasin (52).

7. Procédé selon l'une des revendications précédentes, caractérisé en ce que le robot de montage (24) présente au moins un groupe de vissage (58) avec amenée automatique des vis.

8. Procédé selon l'une des revendications précédentes, caractérisé en ce que le robot de montage (24), en raison de son déplacement relatif par rapport au battant, est positionné successivement aux angles requis du battant, afin de permettre la fixation successive de chaque équerre sur le battant (Fig. 3, 5, 7, 8, 9, 10, 11).

9. Procédé selon l'une des revendications précédentes, caractérisé en ce que, dans la première phase de montage, le battant est bloqué sur un support de montage (36) fixe et le robot de montage (24) est déplacé d'un angle de battant à l'autre.

10. Procédé selon la revendication 9, caractérisé en ce que le robot de montage (24) présente une tête de montage (22) qui est montée sur un pont (48) déplaçable latéralement et coiffant le battant (12), susceptible de tourner autour d'un axe (D) sensiblement perpendiculaire au plan du battant, et déplaçable dans la direction longitudinale du pont (E).

11. Procédé selon l'une des revendications 1 à 10, caractérisé en ce que, dans la première phase de montage, le battant (12) est bloqué sur un support de montage (36') susceptible de tourner autour d'un axe (S) sensiblement perpendiculaire au plan du battant et, de préférence, susceptible d'être déplacé en un mouvement de va-et-vient dans une direction perpendiculaire à celui-ci (double flèche V), et en ce que le support de montage (36') déplace successivement les différents angles de battant en direction du robot de montage (24").

12. Procédé selon la revendication 11, caractérisé en ce que le robot de montage (24) présente une tête de montage (22') susceptible de tourner autour d'un axe (H) entre une position orientée vers le magasin et une position de montage et, de préférence, susceptible d'être déplacée selon un mouvement de va-et-vient, radialement (direction G) par rapport à celui-ci.

13. Procédé selon l'une des revendications précédentes, caractérisé en ce qu'une ou la tête de montage (22, 22') du robot de montage (24, 24') présente un support (56, 56') destiné aux pièces en équerre (18), susceptible de se déplacer au moins entre une position de préparation au montage (Fig. 4) et une position de montage (56, 56'), l'équerre (18) étant placée, dans la position de préparation au montage, dans la zone de l'angle de battant correspondant, mais en-dehors d'une rainure formant logement (61) de l'équerre et, par contre, dans la position de montage, à l'intérieur de la rainure formant logement (61) de l'équerre.

14. Procédé selon la revendication 13. caractérisé en ce que le support (56) est susceptible d'être déplacé, sensiblement dans la direction de la bissectrice (18a) de l'équerre (18), entre la position de préparation au montage et la position de montage.

15. Procédé selon l'une des revendications précédentes, caractérisé en ce qu'une ou la tête de montage (22) du robot de montage (24) présente un support aimanté (M) destiné à l'équerre.

16. Procédé de montage, au moins servi-automatisé, de ferrures sur le battant (12) d'une fenêtre oscillo-battante ou similaire, la ferrure comprenant trois équerres (18) identiques avec des éléments de verrouillage et des éléments de liaison (102, 104, 106, 108) dont la longueur peut s'adapter aux dimensions de chaque battant,
caractérisé en ce que
le battant (12) est bloqué sur un support de montage (36) et
tout d'abord, une équerre (18) est retirée, par un robot de montage (24), d'un magasin (52) prévu sur le robot de montage (24),
en ce que le robot de montage (24) s'approche ensuite d'un premier angle (20a) du battant (12) et y positionne l'équerre (18),
en ce que celle-ci est ensuite vissée à fond sur le battant (12), au niveau des deux branches d'équerre, par des groupes de vissage (58) à amenée automatique de vis, intégrés dans le robot de montage (24),
en ce que le robot de montage (24) retire ensuite une deuxième équerre (18) du magasin (52) et s'approche d'un angle adjacent (20b) du battant (12) et y positionne la deuxième équerre (18) qui est, à son tour, vissée à fond par les groupes de vissage (58),
en ce que le robot de montage (24) retire ensuite une troisième équerre (18) et s'approche, suivant la même direction de rotation autour du battant (12), d'un angle suivant (20c) du battant (12) et y positionne la troisième équerre (12) qui, à son tour, est vissée à fond par les groupes de vissage (58) et
en ce que le robot de montage (24) revient ensuite dans sa position de départ (22a) et le battant (12) présent sur le support de montage (36) est libéré et transporté plus loin vers un poste de montage, pour le montage des éléments de liaison (102, 104, 106, 1û8).

17. Procédé selon la revendication 16, caractérisé en ce que le support de montage (36) est déplaçable et qu'en remplacement du déplacement du robot de montage (24) d'un angle de battant à ('autre, le support de montage (36) déplace le battant (12) successivement afin que l'angle de battant concerné se trouve en regard du robot de montage (24') pour réaliser la fixation de l'équerre (18).

18. Procédé selon l'une des revendications précédentes, caractérisé en ce que, dans la deuxième phase de montage, les éléments de liaison (102, 104, 106, 108 ; 202, 204, 206) sont posés manuellement ou au moyen de robots de montage (282) sur le battant (12), le cas échéant après avoir été découpés à la bonne longueur, et sont ensuite fixés sur le battant (12) au moyen de robots de fixation, en particulier au moyen d'un groupe de vissage (112 ; 212).

19. Procédé selon l'une des revendications précédentes, caractérisé en ce que, dans la deuxième phase de montage, lors d'une première étape, un premier élément de liaison (102) est posé sur le battant (12), en ce que, lors d'une deuxième étape, un deuxième élément de liaison (104) est posé sur le battant (12) et le premier élément de liaison (102) est fixé automatiquement, par un ou le groupe de vissage (112), sur le battant,
en ce que, le cas échéant, lors d'une troisième étape, un troisième élément de liaison (106) est posé et le deuxième élément de liaison (104) est fixé,
en ce que, le cas échéant, lors d'une quatrième étape, un quatrième élément de liaison (108) est posé et le troisième élément de liaison (106) est fixé et
en ce que, lors de la dernière étape, l'avant-dernier élément de liaison (108) est fixé

20. Procédé selon la revendication 19, caractérisé en ce que la pose des éléments de liaison (102, 104, 106, 108) s'effectue manuellement.

21. Procédé selon la revendication 20, caractérisé en ce que la pose et la fixation des éléments de liaison (202, 204, 206) s'effectuent à chaque fois lors de la même étape.

22. Procédé selon la revendication 21, caractérisé en ce que la pose s'effectue au moyen de robots de montage (282).

23. Procédé selon l'une des revendications 18 à 22. caractérisé en ce que le battant (12) est tourné à chaque fois de 90°, entre les étapes.

24. Procédé selon l'une des revendications 18 à 23, caractérisé en ce que le groupe de vissage (112 ; 212) est déplaçable parallèlement à l'arête du battant qui est situé en regard de lui (direction X).

25. Procédé selon l'une des revendications 18 à 24, caractérisé en ce que le robot de montage (282) présente une unité d'approvisionnement pour le prélèvement, lorsque cela est souhaité, de l'élément de liaison concerné hors d'une unité formant magasin (280).

26. Procédé selon la revendication 25, caractérisé en ce que l'unité formant magasin (280), qui présente plusieurs compartiments différents (280a, 280b, 280c) destinés aux différents éléments de liaison (202, 204, 206), est déplaçable, compartiment par compartiment, par rapport à une tète de prélèvement de l'unité d'approvisionnement.

27. Procédé selon la revendication 25 ou 26, caractérisé en ce que l'unité d'approvisionnement est conçue pour faire tourner, si cela est souhaité, un élément de liaison (202, 204, 206) prélevé dans l'unité formant magasin (280), dans le sens d'une permutation des deux extrémités de l'élément de liaison (202, 204, 206).

28. Procédé selon la revendication 27, caractérisé en ce que le robot de montage (282) présente un, de préférence deux bras robotisés (284, 286) avec deux axes de rotation différents (A2, A4 ; A3, A5) et, de préférence, une longueur de bras adaptable.

29. Procédé selon la revendication 28, caractérisé en ce que l'extrémité libre du bras robotisé (284, 286) est conformée en support (284d, 286d), de préférence en support aimanté destiné aux éléments de liaison, afin de permettre leur prélèvement hors de l'unité d'approvisionnement (280) et leur pose sur le battant (12).

30. Système de ferrures, en particulier système de ferrures oscillo-battantes ou système de ferrures battantes pour fenêtres, portes ou similaires, comprenant des équerres (18) de construction identique présentes sur au moins deux angles de battant et comprenant des éléments de liaison (102, 104, 106, 108 ; 202, 204, 208) reliés aux équerres (18), permettant de mettre en oeuvre le procédé selon l'une des revendications précédentes.
